**Europäisches Patentamt**

(19) **European Patent Office**     (11) Numéro de publication: **0 035 061**
**B1**
**Office européen des brevets**

(12) **FASCICULE DE BREVET EUROPEEN**

(45) Date de publication du fascicule du brevet: (51) Int. Cl.³: **H 04 L 5/22**, H 04 J 3/12
**14.03.84**

(21) Numéro de dépôt: **80107608.4**

(22) Date de dépôt: **04.12.80**

(54) Procédé et dispositif pour multiplexer un signal de données et plusieurs signaux secondaires, procédé et dispositif de démultiplexage associés, et émetteur-récepteur d'interface en faisant application.

(30) Priorité: **27.02.80 FR 8004748**

(43) Date de publication de la demande:
**09.09.81 Bulletin 81/36**

(45) Mention de la délivrance du brevet:
**14.03.84 Bulletin 84/11**

(84) Etats contractants désignés:
**DE FR GB IT**

(56) Documents cités:
**DE - B - 2 727 912**

(73) Titulaire: **International Business Machines Corporation, Old Orchard Road, Armonk, N.Y. 10504 (US)**

(72) Inventeur: **Vachee, Pierre, 32, Pian du Bois, F-06610 La Gaude (FR)**

(74) Mandataire: **de Pena, Alain, Compagnie IBM France Département de Propriété Industrielle, F-06610 La Gaude (FR)**

BUNDESDRUCKEREI BERLIN

Procédé et dispositif pour multiplexer un signal de données et plusieurs signaux secondaires,
procédé et dispositif de démultiplexage associés, et emetteurrécepteur d'interface en faisant application

### Domaine Technique

La présente invention concerne les systèmes de transmission de données et plus particulièrement un procédé et un dispositif de multiplexage temporel pour combiner un signal de données binaires et plusieurs signaux binaires secondaires respectivement fournis par des sources différentes en un seul train d'impulsions, et pouvant accepter des signaux de données ayant plusieurs débits différents pour transmission en mode synchrone ou asynchrone, et le procédé et le dispositif de démultiplexage associés. La présente invention concerne également l'application du procédé de multiplexage à un émetteur d'interface qui permet de transmettre notamment l'état des circuits binaires de liaison d'une jonction CCITT V24 sur une ligne de transmission, et le récepteur d'interface associé.

### Etat de la technique

La technique de multiplexage temporel est largement utilisée pour transmettre plusieurs signaux de données produits par plusieurs sources à travers un seul support de transmission. En bref, selon la technique de multiplexage temporel, le temps est divisé en trames répétitives d'égales longueurs et chaque trame est divisée en intervalles de temps. Dans chaque trame, chaque intervalle de temps est affecté à une source de données et permet d'écouler un bit ou un caractère de plusieurs bits selon le type du multiplexeur utilisé. Pour que les multiplexeurs puissent reconnaître la position des différents intervalles de temps dans la trame, il faut qu'ils puissent reconnaître le début de chaque trame. Pour cela, le premier intervalle de temps est utilisé aux fins de synchronisation. Dans un multiplexeur par caractère, le premier intervalle de temps transmet en permanence un caractère connu particulier appelé caractère de verrouillage de trame et le multiplexeur récepteur, ou démultiplexeur, n'autorise la transmission des données que s'il a reçu le caractère de verrouillage de trame au début d'au moins deux trames successives. Dans un multiplexeur par bit, le premier intervalle transmet successivement les différents bits d'un caractère de verrouillage de trame et le démultiplexeur n'autorise la transmission des données que s'il a reçu correctement le caractère de verrouillage de trame.

Une littérature très abondante décrit les différents procédés et dispositifs de multiplexage temporel utilisés pour réaliser des multiplexeurs qu'ils soient simples comme le multiplexeur IBM 2712 ou plus sophistiqué comme le multiplexeur IBM 3705. Or, tous ces procédés et dispositifs s'ils sont bien adaptés à la réalisation de tels multiplexeurs qui sont transparents aux signaux à multiplexer, c'est-à-dire qu'ils ignorent la nature de ces signaux, ne se prêtent pas à la réalisation de dispositifs plus simples pour combiner des signaux variant par leur nature tel que des signaux de données et des signaux secondaires, pour transmission à travers un seul support de transmission.

On trouve la nécessité de transmettre des signaux de données et des signaux secondaires dans un réseau de télétraitement. Dans un tel réseau, en général un équipement terminal de traitement de données (ETTD) principal communique avec plusieurs ETTD distants tributaires. L'ETTD principal communique avec chacun des ETTD distants au moyen de deux équipements de terminaison de circuit de données (ETCD), appelés modems, qui leur sont respectivement associés. Le CCITT (Comité Consultatif International Télégraphique et Téléphonique) a défini dans son avis V24 la jonction entre un ETTD et son ETCD associé. Cette jonction comprend les circuits binaires de liaison nécessaires aux échanges de signaux binaires de données, de commande et d'horloge. Pour relier un ETTD à un ETCD on utilise en général un câble de seize conducteurs permettant de véhiculer seize de ces signaux binaires. Ce câble a une longueur limitée et il est donc nécessaire de prévoir des modems spécialisés pour permettre la connexion d'un ETTD à son ETCD principal associé lorsque ce dernier se trouve éloigné de l'ETTD par une distance supérieure à la longueur maximum du câble. En outre, lorsque l'ETTD est un multiplexeur qui doit être relié par exemple à une centaine d'ETCD il faut une centaine de ces câbles et l'ETTD doit avoir une taille physique importante pour en permettre la connexion alors que la technique d'intégration à grande échelle permet une réduction très substantielle de l'encombrement des circuits électroniques que contient l'ETTD. Il est donc souhaitable de pouvoir disposer d'un moyen pour transmettre les signaux de la jonction V24 à travers un support de transmission qui n'exige pas seize conducteurs.

La demande de brevet français No. 7 829 352 déposée par la demanderesse le 9 octobre 1978 et publiée le 9.5.80 sousle numéro 2 438 943, décrit un procédé pour coder simultanément une premier et une seconde séquence de signaux binaires en une qunique séquence d'impulsions pour transmission sur un support de transmission. La première séquence est constituée par les données fourniers par l'ETTD et la seconde séquence est constituée par le résultat du multiplexage temporel des signaux de commande fournis par l'ETTD. Selon le procédé décrit dans la demande de brevet précitée, on groupe les signaux binaires en paires, chacune d'elles comprenant un signal binaire de la première séquence et un signal binaire de la seconde séquence. Chaque paire est ensuite codée de la façon suivante: si le signal binaire provenant de la première séquence a une première valeur, on code la paire en un signal du type bipolaire; si le signal binaire provenant de la première séquence est a la valeur opposée à ladite première valeur, on code la paire en un signal du type biphasé.

Le procédé ci-dessus permet de réaliser un émetteur-récepteur d'interface qui peut transmettre les signaux de la jonction V24 sur une ligne de transmission mais présente cependant l'inconvénient de n'accepter qu'un seul débit binaire du signal de données. En général, un même ETTD peut transmettre des données avec plusieurs débits binaires et il faudrait prévoir alors un de ces émetteur-récepteurs d'interface pour chacun de ces débits et des moyens pour détecter tout changement de débit des données et pour sélectionner l'émetteur-récepteur d'interface approprié en conséquence.

### Exposé de l'invention

Un objet de l'invention est de fournir un procédé et un dispositif de multiplexage temporel pour combiner un signal de données et plusieurs signaux binaires secondaires en un train d'impulsions, ce procédé et ce dispositif pouvant accepter des signaux de données ayant plusieurs débits binaires différents pour transmission en mode synchrone ou asynchrone.

Un autre objet de l'invention est de fournir le procédé et le dispositif de démultiplexage temporel associés aux procédé et dispositif de multiplexage ci-dessus.

Un autre objet de l'invention est de fournir un émetteur d'interface faisant application du procédé de multiplexage ci-dessus pour transmettre les signaux de données, de commande et d'horloge échangés par deux équipements de données à travers une seule ligne de transmission.

Un autre objet de l'invention est de fournir le récepteur d'interface associé à l'émetteur d'interface ci-dessus.

D'une manière générale, selon le procédé de multiplexage de l'invention le signal de données et N signaux secondaires sont multiplexés au moyen de deux trames différentes, une trame dite asynchrone et une trame dite synchrone, selon que les données sont à transmettre en mode asynchrone ou en mode synchrone. La trame asynchrone comprend un bit de verrouillage de trame ayant une valeur prédéterminée, un bit de données et N bits appartenant respectivement aux N signaux secondaires. La trame synchrone est divisée en n sous-trames de longueur $l_1$ bits, où n est égal au nombre entier immédiatement supérieur à la quantité $N/l_1 - 2$. La longueur $l_1$ est définie par la relation $l_1 = LR/DR$ où LR est le débit binaire fixe du train d'impulsions résultant du multiplexage et DR est le débit binaire du signal de données. Chaque sous-trame comprend un bit de synchronisation ayant la valeur opposée à celle du bit de verrouillage de trame, un bit de données et plusieurs bits provenant respectivement des signaux secondaires. La dernière sous-trame de la trame comprend en outre un bit de verrouillage de trame. Chacun des bits de la trame, que celle-ci soit synchrone ou asynchrone, est associé avec un bit de contrôle qui a une première valeur prédéterminée lorsqu'il est associé à un bit de synchronisation ou à un bit de verrouillage de trame et la valeur opposée lorsqu'il est associé à un bit de données ou à un bit provenant des signaux secondaires. Chacun des bits de la trame et son bit de contrôle associé sont ensuite codés pour transmission simultanée à travers le support de transmission.

L'invention propose aussi le procédé de démultiplexage associé au procédé de multiplexage décrit ci-dessus.

Un émetteur et un récepteur d'interface faisant application des procédés décrits ci-dessus et permettant les échanges de signaux de données, de commande et d'horloge entre équipements de données sont aussi proposés par l'invention.

D'autres objets, caractéristiques et avantages de la présente invention ressortiront mieux de l'exposé qui suit, fait en référence aux dessins annexés à ce texte, qui représentent un mode de réalisation préféré de celle-ci.

### Brève description des figures

La figure 1 représente une liaison de données typique entre deux ETTD.

La figure 2 représente une liaison de données utilisant un émetteur et un récepteur d'interface conformes à l'invention.

La figure 3 est un arbre de chronologie montrant les realtions entre le débit binaire en ligne et les différents débits binaires du signal de données.

La figure 4 illustre une trame asynchrone conforme à l'invention.

La figure 5 illustre des exemples de trames synchrones conformes à l'invention pour divers débits du signal de données.

La figure 6 est le bloc diagramme d'un émetteur d'interface conforme à l'invention.

La figure 7 représente un exemple de réalisation du générateur de signaux d'horloge d'émission 11 de la figure 6.

La figure 8 illustre la forme des signaux en divers points du générateur de la figure 7.

La figure 9 représente un exemple de réalisation du multiplexeur 12 de la figure 6.

La figure 10 représente un exemple de réalisation du codeur 13 de la figure 6.

La figure 11 illustre la forme des signaux en divers points du codeur de la figure 10.

La figure 12 est le bloc diagramme d'un récepteur d'interface conforme à l'invention.

La figure 13 représente un exemple de réalisation du récepteur analogique 91 de la figure 12.

La figure 14 représente un exemple de réalisation du générateur de signaux d'horloge de réception 92 de la figure 12.

Les figures 15 et 16 illustrent la forme de signaux en divers points du générateur de la figure 12 pour des fonctionnements en modes asynchrone et synchrone.

La figure 17 représente un exemple de réalisation du décodeur 93 de la figure 12.

La figure 18 représente un exemple de réalisation du démultiplexeur 94 de la figure 12.

### Description d'un mode de Réalisation de l'invention

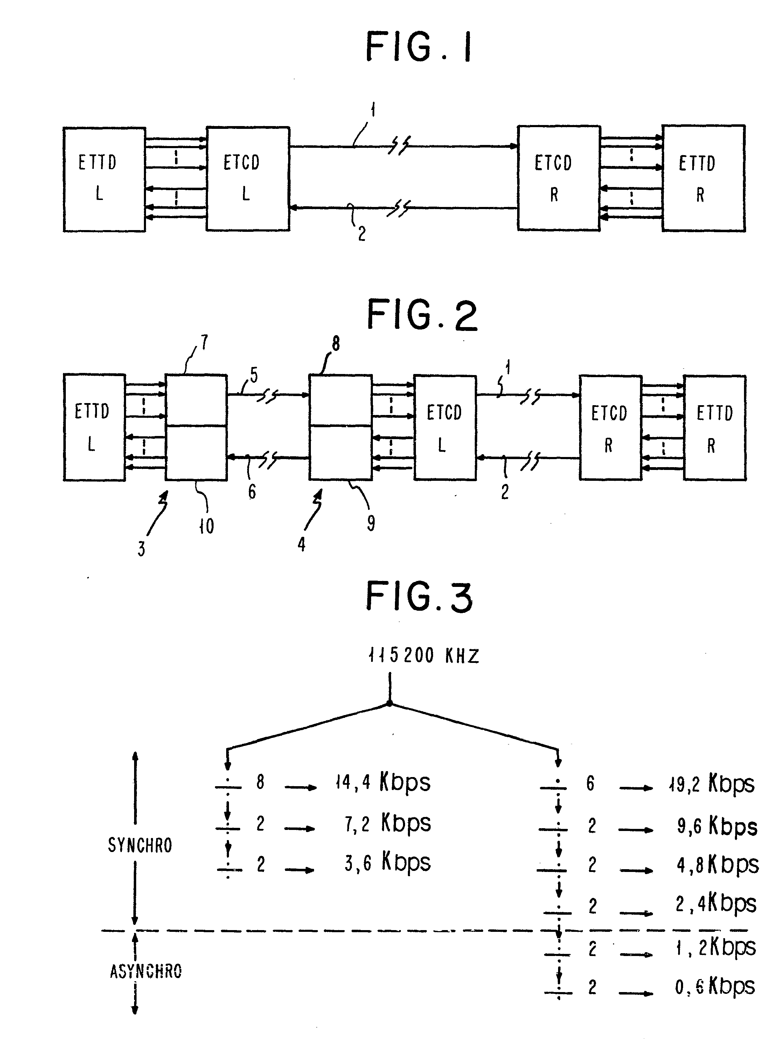

La figure 1 illustre une liaison de données typique entre deux ETTD, L et R, éloignés géographiquement l'un de l'autre. Les ETTD L et R communiquent entre eux à travers deux lignes de transmission 1 et 2 au moyen de deux ETCD, L et R, qui leur sont respectivement associés. Les ETCD L et R sont situés respectivement à proximité des ETTD L et R. Chacun des ETTD L et R échange des signaux avec son ETCD associé par l'intermédiaire d'une jonction normalisée définie par l'Avis V24 du CCITT. Cet avis définit les circuits binaires de liaison nécessaires aux échanges de signaux binaires de données, de commande et d'horloge entre un ETTD et son ETCD associé pour l'établissement du circuit de données, l'initialisation de l'ETCD, la transmission des données et la libération du circuit de données. Les circuits de liaison peuvent être divisés en deux groupes:

— les circuits d'émission qui engendrent des signaux dans le sens de l'ETTD vers l'ETCD, et dont on peut citer par exemple les circuits suivants:
— le circuit désigné »Emission des données« (ED) à travers lequel les données issues de l'ETTD sont transférés à l'ETCD,
— le circuit désigné »Demande pour émettre« (DPE) à travers lequel l'ETTD transfére à l'ETCD un signal de commande qui met l'ETCD en état d'émettre,
— le circuit désigné »Equipement terminal de données prêt« (TDP) à travers lequel l'ETTD transfère à l'ETCD un signal de commande qui indique que l'ETTD est prêt à fonctionner, et
— le circuit désigné »Horloge émission« (HET) à travers lequel sont transférés les signaux d'horloge fournis par l'ETTD lorsqu'il pilote l'émission des données, et
— les circuits de réception qui engendrent des signaux dans le sens de l'ETCD vers l'ETTD, et dont on peut citer, par exemple, les circuits suivants:
— le circuit désigné »Réception des données« (RD) à travers lequel les données reçues par l'ETCD sont transférées à l'ETTD,
— le circuit désigné »Prêt à émettre« (PAE) à travers lequel l'ETCD transfére a l'ETTD un signal de commande qui indique que l'ETCD est prêt à émettre,
— le circuit désigné »Poste de données prêt« (PDP) à travers lequel l'ETCD transfére à l'ETTD un signal de commande qui indique que l'ETCD est prêt à fonctionner, et
— le circuit désigné »Horloge émission« (HEM) à travers lequel sont transférés les signaux d'horloge fournis par l'ETCD lorsqu'il pilote l'émission des données, et
— le circuit désigné »Horloge réception« (HR) à travers lequel l'ETCD transfère les signaux d'horloge de réception à l'ETTD.

Pour situer l'invention dans son contexte on a représenté, à titre d'exemple, sur la figure 2 une liaison de données utilisant des émetteurs et des récepteurs d'interface conformes à l'invention. La liaison de la figure 2 comprend les éléments de la liaison de la figure 1, pour lesquels on a conservé les mêmes références, mais diffère de cette dernière en ce que l'ETCD L n'est pas à proximité de l'ETTD L associé. L'ETTD L et l'ETTD L communiquent entre eux à travers deux répéteurs d'interface 3 et 4 qui sont reliés entre-eux par deux lignes de transmission 5 et 6. Les signaux engendrés par les circuits d'émission de la jonction V24 de l'ETTD L sont multiplexés dans l'émetteur d'interface 7 du répéteur d'interface 3 pour transmission sur la ligne 5. Le récepteur d'interface 8 du répéteur d'interface 4 démultiplexe le signal reçu sur la ligne 5 en signaux qui sont appliqués aux circuits de liaison appropriés de la jonction V24 de l'ETCD L. Les signaux engendrés par les circuits de réception de la jonction V24 de l'ETCD L sont multiplexés dans l'émetteur d'interface 9 du répéteur d'interface 4 pour transmission sur la ligne 6. Le récepteur d'interface 10 du répéteur d'interface 3 démultiplexe le signal reçu sur la ligne 6 en signaux qui sont appliqués aux circuits de liaison appropriés de la jonction V24 de l'ETTD L. Les répéteurs d'interface 3 et 4 sont transparents et les ETTD L et R communiquent entre eux comme dans la liaison de la figure 1.

On décrira maintenant le procédé de multiplexage de l'invention. Le procédé de l'invention permet de multiplexer plusieurs signaux binaires secondaires et un signal de données binaires en un train d'impulsions à débit binaire fixe, le signal de données pouvant avoir plusieurs débits binaires différents et pouvant être transmis soit en mode asynchrone soit en mode synchrone. On supposera, à titre d'exemple, que le procédé de l'invention est utilisé dans un émetteur d'interface et que les signaux secondaires sont des signaux de commande échangés entre un ETTD et un ETCD. On supposera en outre que l'émetteur d'interface accepte les signaux de données avec les débits binaires normalisés par le CCITT suivants:

- pour la transmission asynchrone: 600 et 1200 bits par seconde (bps),
- pour la transmission synchrone: 600, 1200, 2400, 4800, 9600, 19 200 bps, et 3600, 7200 et 14 400 bps.

On choisit un débit binaire fixe en ligne (après multiplexage) qui soit compatible avec l'ensemble des débits binaires acceptés. Dans l'exemple, pour simplifier la réalisation du dispositif utilisant l'invention le débit binaire choisi est égal au plus petit commun multiple pair des débits binaires 14 400 bps et 19 200 bps, soit 115 200 bps. Les différents débits binaires acceptés pourront être dérivés du débit binaire en ligne par divisions successives comme illustré sur la figure 3.

Dans toute technique de multiplexage temporel le train de bits multiplexé à débit binaire fixe est découpé en blocs successifs de longueurs identiques appelés trames, chacune d'elles étant découpées en intervalles de temps, et on affecté à l'intérieur de chaque trame un intervalle de temps à chacun des signaux à multiplexer. Ces signaux sont échantillonnés au rythme de répétition des trames, et dans chaque trame un échantillon de chaque signal est placé à l'intérieur de l'intervalle de temps qui lui est affecté. Dans ce qui suit, les différents signaux à multiplexer étant binaires, les échantillons se présenteront sous la forme de bits, et les intervalles de temps auront tous une durée égale à un temps bit.

Dans le procédé de l'invention, on définit deux trames désignées »trame asynchrone« et »trame synchrone« qui sont utilisées sélectivement selon que le signal de données à multiplexer avec les signaux de commande est à transmettre en mode asynchrone ou synchrone.

La longueur de la trame asynchrone est définie comme suit. Si on désigne par LR bps le débit binaire en ligne et $l_0$ la longueur exprimée en bits de la trame asynchrone, pour pouvoir écouler tous les bits du signal de données, le rytheme de répétition des trames, $LR/l_0$ trames par seconde, doit être égal au plus élevé des débits binaires du signal de données qu'accepte l'émetteur d'interface pour transmission en mode asynchrone. Dans notre exemple, on a LR = 115 200 bps et le plus élevé des débits binaires en mode asynchrone est 1200 bps, on devrait donc avoir:

$$115\ 200\ /\ l_0 = 1200$$
$$\text{soit} \quad l_0 = 96\ \text{bits.}$$

Une trame asynchrone de 96 bits permettrait de multiplexer un signal de données à 1200 bps et 94 signaux de commande, un bit de la trame étant utilisé comme bit de verrouillage de trame.

En pratique, il est rare qu'on ait 94 signaux de commande à transmettre. En outre, le fait d'avoir une trame de 96 bits de long entraîne que deux échantillons successifs d'un même signal de commande soient séparés par un intervalle de temps égal à la durée de 96 bits. Cet intervalle de temps de 96 bits entraînerait un retard dans le transfert de l'état d'un signal entre l'ETTD et l'ETCD associé. Selon un mode de réalisation préféré de l'invention, si on désigne par N le nombre de signaux binaires de commande à multiplexer on choisit comme longueur de trame asynchrone un sous multiple de 96 qui soit supérieur ou égal à N + 2. Dans notre exemple, et en supposant qu'on ait dix signaux de commande binaires à multiplexer, on choisira une longueur de trame asynchrone égale à 12 bits.

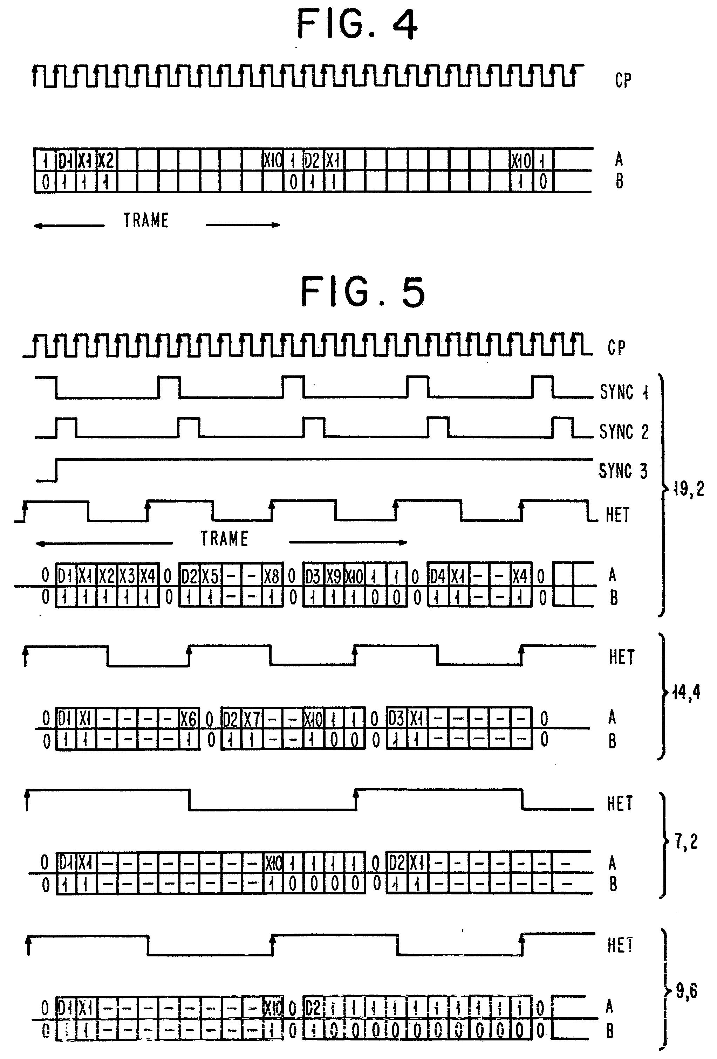

Une telle trame asynchrone de 12 bits de longueur, c'est-à-dire comprenant 12 intervalles de temps, est illustrée sur la figure 4.

La composition de la trame asynchrone est la suivante: le premier intervalle de temps contient un bit de verrouillage de trame qui a une valeur prédéterminée, par exemple égale à 1. Le second intervalle de temps contient un bit de données et les dix intervalles de temps qui suivent contiennent respectivement des échantillons binaires des dix signaux de commande X1 − X10 + a multiplexer. On notera que les trames successives écoulent les bits de données avec un débit égal à 115 200/12 = 9600 bps alors que les débits de données normalisés en mode asynchrone sont, comme vu plus haut, 1200 et 600 bps. Ceci ne fait qu'introduire une redondance dans le transfert des signaux de données entre un ETTD et son ETCD associé mais n'a aucun effet sur la transmission des données entre les ETTD L et R comme décrit brièvement ci-dessous. On supposera, par exemple, que les ETTD L et R échangent des données avec un débit de 1200 bps, et qu'un bit 1 est présent sur le circuit de liaison ED de l'ETTD L. Ce bit I est présent pendant un intervalle de temps de 1/1200 sec au cours duquel il est échantillonné huit fois (9600/1200 = 8) par le dispositif de l'invention produisant ainsi huit bits 1 qui sont transférés à l'ETCD L dans le premier intervalle de temps de huit trames successives. Cependant, l'ETCD L qui fonctionne avec un débit de 1200 bps ne transmettra qu'un seul de ces huit bits à l'ETCD R.

Dans les procédés de multiplexage temporel connus, pour délimiter chacune des trames, chaque trame contient un caractère de verrouillage de trame qui est une combinaison de bits particulière et unique que le dispositif démultiplexeur peut aisément reconnaître, ce qui permet au dispositif démultiplexeur de déterminer la position des différents intervalles de temps. Dans le procédé de l'invention, le verrouillage des trames est réalisé par un unique bit de verrouillage de trame ayant une valeur prédéterminée, comme vu plus haut. Evidemment, comme les autres bits de la trame peuvent aussi prendre cette valeur prédéterminée, si on utilisait la trame telle que l'on vient de la décrire, le dispositif démultiplexeur ne pourrait pas reconnaître le bit de verrouillage de trame parmi les autres bits de la trame. Pour permettre la reconnaissance du bit de verrouillage, on génère des bits de contôle, chacun d'eux étant associé à un bit de la trame, le bit de contrôle associé au bit de verrouillage de trame ayant une première valeur prédéterminée, par exemple la valeur 0, et tous les bits de contrôle associés avec les bits de données et les bits provenant des signaux de commande ayant la valeur opposée de celle du bit de contrôle associé au bit de verrouillage de trame, c'est-à-dire dans l'exemple choisi la valeur 1. On dira que les bits de la trame définissent un canal de données désigné canal A et que les bits de contrôle définissent un autre canal désigné canal B. On constitue des paires de bits, chacune d'elles comprenant un bit de canal A et son bit associé du canal B, et on code chacune de ces paires pour transmission sur la ligne 5 (figure 2).

Selon un mode de réalisation préféré de l'invention, on code chacune des paires de la façon suivante:

— si le bit d'un canal prédéterminé a une première valeur prédéterminée, par exemple 0, on code la paire en un signal de type bipolaire, et
— si le bit de ce canal prédéterminé a la valeur complémentaire de ladite première valeur, c'est-à-dire dans l'exemple choisi la valeur 1, on code la paire en un signal de type biphasé.

Le tableau I c-dessous illustre un exemple de codage des paires.

Tableau I

| Canal A | Canal B | Codage | | |
|---------|---------|--------|------|----------|
| | | T 1 | T 2 | |
| 0 | 0 | 0 | 0 | bipolaire |
| 1 | 0 | PP | 0 | |
| 0 | 1 | NP | PP | biphase |
| 1 | 1 | PP | NP | |

où

T1 = T2 = T/2
T = durée d'un temps bit
PP = impulsion positive
NP = impulsion négative

On décrira maintenant la composition d'une trame synchrone selon l'invention en se référant à la figure 5. La trame synchrone a une longueur qui dépend du débit du signal de données à multiplexer et du nombre de signaux de commande à multiplexer. Elle comprend une ou plusieurs sous-trames de longueurs identiques et dont la longueur dépend du débit du signal de données; le dernier intervalle de temps d'une trame contient toujours un bit de verrouillage de trame. Le nombre de sous-trames contenues dans une trame dépend du nombre de signaux de commande. Chaque sous-trame comprend un bit de synchronisation, un bit de données et un certain nombre d'échantillons de signaux de commande. Si on désigne par DR le débit exprimé en bits par seconde du signal de données, la longueur, $l_1$ d'une sous-trame est donnée par la relation:

$$l_1 = LR/DR$$

Par exemple, si le débit du signal de données est 19 200 bps, on aura:

$$l_1 = \frac{115\,200}{19\,200} = 6.$$

Si on désigne par N le nombre de signaux de commande à multiplexer, et sachant qu'une sous-trame contient un bit de synchronisation, un bit de données et des échantillons des signaux de commande, comme vu plus haut, le nombre n de sous-trames contenues dans une trame sera égal au nombre entier supérieur à

$$N/(l_1 - 2)$$

Dans l'exemple ci-dessus, si N = 10, une trame comprendra trois sous-trames. La trame correspondant à cet exemple est illustrée sur la figure 5. Dans toutes les sous-trames le premier intervalle de temps contient un bit de synchronisation dont la valeur est le complément de celle du bit de verrouillage de trame, à savoir 0 dans l'exemple, et le deuxième intervalle de temps contient un bit de données. Les bits de synchronisation sont fournis par les signaux d'horloge d'émission qui pilotent l'emission des données. Dans la première sous-trame on trouve successivement le bit 0 de synchronisation, un bit D1 de donnéss, et les échantillons de quatre signaux de commande X1 — X4. Dans la seconde sous-trame on trouve successivement le bit 0 des synchronisation, un bit D2 de données et les échantillons de quatre autres signaux de commande X5 — X8. Dans la troisième et dernière sous-trame, on trouve le bit 0 de synchronisation, un bit D3 de données, les échantillons des deux derniers signaux de commande X9 et X10 et deux bits 1. Le bit 1 contenu dans le dernier intervalle de temps de la troisième sous-trame, c'est-à-dire le dernier intervalle de temps de la trame, est le bit de verrouillage de trame, et le bit 1 qui le précède est un bit de bourrage qui est placé dans l'avant dernier intervalle de temps qui aurait dû être vide, tous les échantillons X1 — X10 des signaux de commande ayant déjà été placé dans la trame.

Comme on l'a fait pour la trame asynchrone on génère des bits de contrôle, chacun d'eux étant associé à un bit de la trame, les bits de contrôle associés aux bits de verrouillage de trame, aux bits de bourrage et au bit de synchronisation ayant la valeur 0 et tous les bits de contrôle associés avec les autres bits de la trame ayant la valeur 1. Les bits de la trame et les bits de contrôle constituent respectivement les canaux de données A et B comme dans le cas de la trame asynchrone et les paires de bits associés sont codés, comme vu plus haut.

On a représenté en outre sur la figure 5 des exemples de trames synchrones correspondant aux débits de données suivants: 14 400 bps, 9600 bps et 7200 bps. On notera que pour un débit d'elles comprenant huit bits, et que la seconde sous-trame contient un bit de bourrage. Pour un débit de 9600 bps, la trame comprend deux sous-trames, chacune d'elles comprenant douze bits, et la seconde sous-trame contient neuf bits de bourrage. Pour un débit de 7200 bps, la trame est constituée par une seule sous-trame comprenant seize bits dont trois de bourrage.

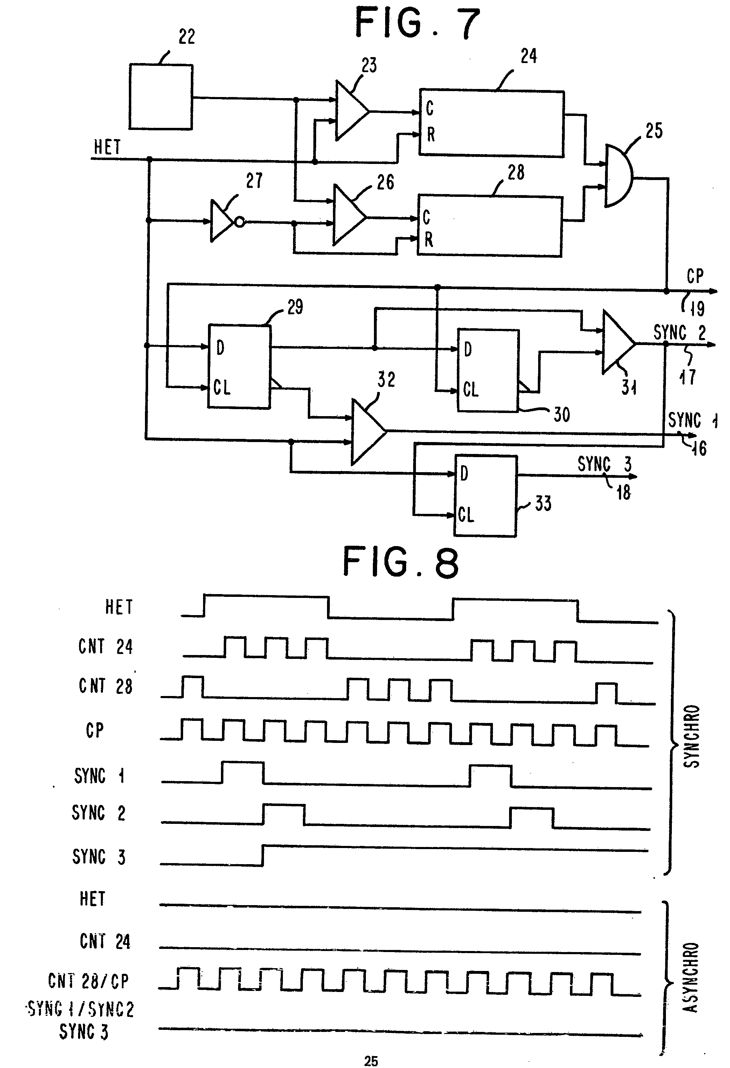

La figure 6 est le bloc diagramme d'un émetteur d'interface conforme à l'invention. A titre d'exemple, on a supposé que l'émetteur représenté sur la figure 6 était l'émetteur d'interface 7 de la figure 2. L'émetteur d'interface comprend les quatre unités fonctionnelles suivantes: un générateur de signaux d'horloge d'émission 11, un multiplexeur 12 et un codeur 13 qui seront décrits ultérieurement en référence aux figures 7, 9 et 10, et un amplificateur équilibré de ligne et d'émission 14 qui est un composant classique disponible dans le commerce et qui ne sera pas décrit en détail. Le multiplexeur 12 reçoit de l'ETTD L (figure 2) des signaux de commande fournis par divers circuits de liaison et les données à transmettre fournis par le circuit »Emission« des données«. Dans ce qui suit, on supposera que les signaux de commande sont au nombre de dix, référencés X1−X10. Les signaux de commande X1−X10 sont appliqués en parallèle au multiplexeur 12 par dix lignes de commande référencées collectivement 15, et les données à transmettre sont appliquées au multiplexeur 12 par une ligne ED. Le multiplexeur 12 reçoit en outre par quatre lignes 16−19 des signaux d'horloge qui seron définis plus loin et qui lui sont fournis par le générateur de signaux d'horloge 11. Le multiplexeur 12 génère les canaux de données A et B qui sont respectivement appliqués au codeur 13 par des lignes 20 et 21. Le codeur 13 reçoit aussi les signaux d'horloge présents sur la ligne 19. La sortie du codeur 13 est amplifiée par l'amplificateur d'émission 14 pour transmission sur la ligne 5 (figure 2) qui, dans l'exemple illustré sur la figure est une parie métallique. En mode synchrone, le générateur 11 reçoit par une ligne HET les signaux d'horloge fournis par l'ETTD L. En mode asynchrone, le générateur 11 ne reçoit aucun signal d'horloge.

On a représenté sur la figure 7 un exemple de réalisation du générateur de signaux d'horloge d'émission 11. Il comprend un oscillateur pilote 22 qui génère des impulsions à une cadence égale à M fois le débit binaire en ligne LR, M étant un nombre entier positif. En supposant LR = 115 200 bps on pourra choisir par exemple M = 32, et la cadence des impulsions générées par l'oscillateur 22 sera alors 3,6864 Mhz. La sortie de l'oscillateur 22 est reliée à une entrée d'une porte ET 23 dont l'autre entrée est reliée à la ligne HET. La sortie de la porte ET 23 est reliée à l'entrée de comptage C d'un compteur binaire 24 ayant son entrée de remise à zéro R reliée à la ligne HET et sa sortie reliée à une entrée d'une porte OU à deux entrées 25. Le compteur 24 est un compteur modulo M qui produit une impulsion de sortie pour M impulsions appliquées à son entrée C. Le contenu du compteur 24 est remis à zéro par le front de descente du signal appliqué à l'entrée R et est maintenu à zéro tant que ce signal est au niveau bas. La sortie de l'oscillateur 22 est en outre reliée à une entrée d'une porte ET 26 dont l'autre entrée est reliée à la sortie d'un inverseur 27 ayant son entrée reliée à la ligne HET. La sortie de la porte ET 26 est reliée à l'entrée de comptage C d'un compteur binaire 28 ayant son entrée de remise à zéro R reliée à la sortie de l'inverseur 27 et sa sortie reliée à l'autre entrée de la porte OU 25. Le compteur 28 est identique au compteur 24 et produit une impulsion de sortie pour M impulsions appliquées à son entrée C. La porte OU 25 produit un signal référencé CP qui est appliqué au multiplexeur 12 et au codeur 13 par la ligne 19 (figure 6). La sortie de la porte OU 25 est appliquée à l'entrée horloge CL d'une bascule type D 29 dont l'entrée D est reliée à la ligne HET. La sortie vraie de la bascule 29 est reliée à l'entrée D d'une autre bascule type D 30 et à une entrée d'une porte ET à deux entrées 31. La bascule 30 a son entrée horloge CL reliée à la sortie de la porte OU 25, et sa sortie complémentaire, identifiée sur la figure par un triangle, reliée à l'autre entrée de la porte ET 31. La porte ET 31 produit un signal référencé SYNC 2 qui est appliqué au multiplexeur 12 par la ligne 17 (figure 6). La sortie complémentaire de la bascule 29 est reliée à une entrée d'une porte ET 32 dont l'autre entrée est reliée à la ligne HET. La porte ET 32 produit un signal référencé SYNC 1 qui est appliqué au multiplexeur 12 par la ligne 16 (figure 6). La sortie die la porte ET 31 est reliée à l'entrée horloge CL d'une bascule type D 33 ayant son entrée D reliée à la ligne HET. La sortie vraie de la bascule 33 produit un signal référencé SYNC 3 qui est appliqué au multiplexeur 12 par la ligne 18 (figure 6). On rappelera que dans une bascule type D, la sortie vraie prend l'état dans lequel le signal appliqué à l'entrée D se trouve à l'instant du front de montée du signal appliqué à l'entrée horloge CL. De ce fait, tout changement d'état du signal appliqué à l'entrée D se produisant lorsque le signal appliqué à l'entrée CL est haut ou bas reste sans effet sur l'état de la sortie vraie.

On décrira maintenant brièvement le fonctionnement du dispositif de la figure 7 en se référant à la figure 8 qui illustre la forme des signaux en divers points du générateur de signaux d'horloge. En mode asynchrone, aucun signal n'est présent sur la ligne HET qui est maintenue à un niveau bas qui maintient la sortie de la porte ET 23 à un niveau bas et le compteur 24 ne produit aucune impulsion. La sortie de l'inverseur 27 est au niveau haut et les impulsions produites par l'oscillateur 22 sont appliquées à l'entrée C du compteur 28 à travers la porte ET 26. Le compteur 28 produit le signal CP. Les signaux SYNC 1, SYNC 2 et SYNC 3 sont maintenus au niveau bas. En mode synchrone, l'ETTD L applique sur la ligne HET des impulsions à la cadence du débit des données, comme illustré sur la figure 8. Pendant que le signal sur la ligne HET est haut, les impulsions produites par l'oscillateur 22 sont appliquées au compteur 24 qui produit le signal CP alors que l'application des impulsions fournies par l'oscillateur 22 au compteur 28 est bloquée par un niveau bas appliqué à la porte ET 26 par la sortie de l'inverseur 27. Pendant que le signal sur la ligne HET est bas, les impulsions produites par l'oscillateur 22 sont appliquées au compteur 28 à travers la porte ET 26. Le compteur 28 produit le signal CP alors que l'application des impulsions fournies par l'oscillateur 22 au compteur 24 est bloquée par le niveau bas sur la ligne HET. La forme des signaux SYNC 1, SYNC 2 et SYNC 3 est illustrée sur la figure 8.

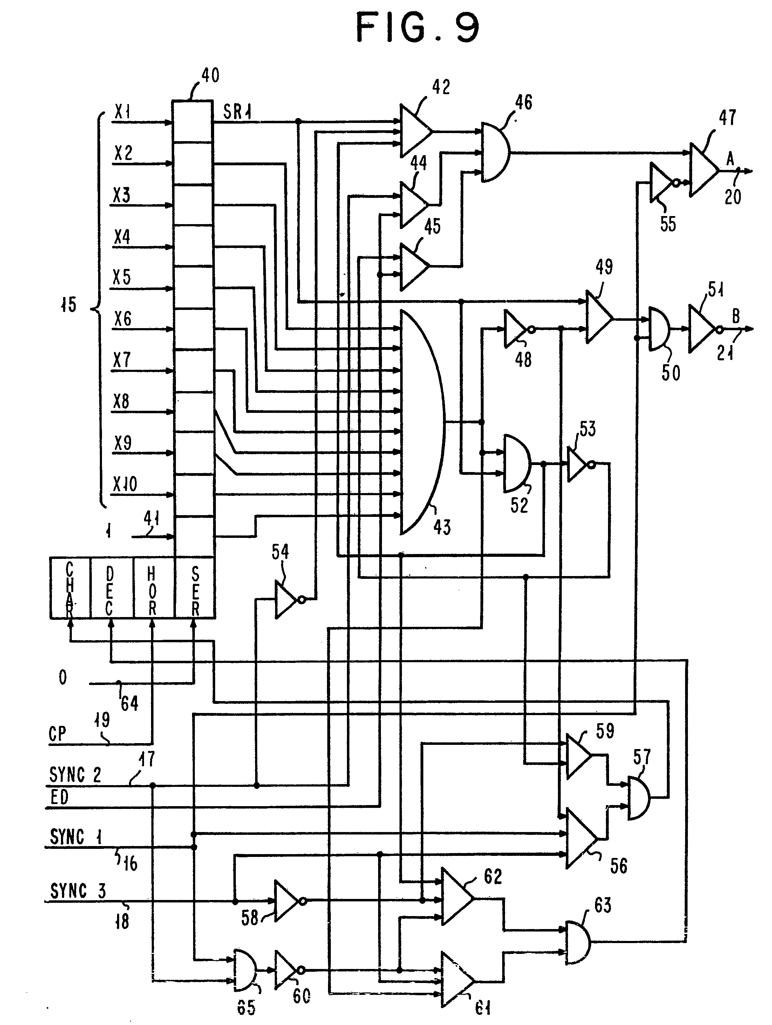

On a représenté sur la figure 9 un exemple de réalisation du multiplexeur 12 de la figure 6. Le multiplexeur 12 comprend un registre à décalage 40 à onze étages à chargement parallèle et série comme il en existe dans le commerce. Chaque étage du registre à décalage 40 peut stocker un seul bit. L'entrée de l'étage le plus bas sur la figure est reliée à une ligne 41 et les entrées des dix autres étages sont reliées respectivement aux dix lignes de commande 15 (figure 6). La sortie de l'étage le plus haut référencé SR1, est reliée à une entrée d'une porte ET à trois entrées 42 et les sorties des dix autres étages sont reliées respectivement aux entrées d'une porte OU 43. La ligne ED (figure 6) est reliée à une entrée d'une porte ET 44 dont l'autre entrée est reliée à la ligne 17. La ligne ED est en outre reliée à une entrée d'une porte ET 45. Les sorties des portes 42, 44 et 45 sont reliées aux entrées d'une porte OU 46 dont la sortie est reliée à une entrée d'une porte ET à deux entrées 47 ayant sa sortie reliée à la ligne 20 (figure 6). La sortie de la porte OU 43 est reliée à travers un inverseur 48 à une entrée d'une porte ET 49 ayant son autre entrée reliée à la sortie SR1. La sortie de la porte ET 49 est reliée à une entrée d'une porte OU 50 ayant son autre entrée reliée à la ligne 16 et sa sortie reliée à la ligne 21 (figure 6) à travers un inverseur 51. La sortie de la porte OU 43 est aussi reliée à une entrée d'une porte OU 52 ayant son autre entrée reliée à la sortie SR1, et sa sortie reliée à une entrée de la porte ET 42 et à l'entrée d'un inverseur 53 dont la sortie est reliée à l'autre entrée de la porte ET 45. La ligne 17 est aussi reliée à une entrée de la porte ET 42 à travers un inverseur 54. La ligne 16 est en outre reliée à l'autre entrée de la porte ET 47 à travers un inverseur 55, et à une entrée d'une porte ET 56 dont les deux autres entrées sont reliées respectivement à la ligne 18 (figure 6) et à la sortie de l'inverseur 48. La sortie de la porte ET 56 est reliée à une entrée d'une porte OU à deux entrées 57 ayant sa sortie reliée à l'entrée Chargement (CHAR) du registre à décalage 40. La ligne 18 est en outre reliée à travers un inverseur 58 à une entrée d'une porte ET ayant son autre entrée reliée à la sortie de l'inverseur 53 et sa sortie reliée à l'autre entrée de la porte OU 57. Les lignes 16 et 17 sont reliées aux entrées d'une porte OU 65 ayant sa sortie reliée à travers un inverseur 60 à une entrée d'une porte ET 61 ayant ses deux autres entrées reliées respectivement à la ligne 18 et à la sortie de la porte OU 43. La sortie de l'inverseur 60 est aussi reliée à une entrée d'une porte ET 62 ayant ses deux autres entrées reliées respectivement à la sortie de l'inverseur 58 et de la porte OU 52. Les sorties des portes ET 61 et 62 sont reliées aux entrées d'une porte OU 63 ayant sa sortie reliée à l'entrée Décalage (DEC) du registre à décalage 40. Le registre à décalage 40 a ses entrées Horloge (HOR) et Entrée série (SER) reliées respectivement à la ligne 19 (figure 6) et à une ligne 64. Le contenu du registre à décalage 40 est décalé d'un étage verslehaut au temps de montée du signal appliqué à son entrée Horloge lorsqu'un niveau haut est présent sur son entrée Décalage. Lorsque le contenu du registre à décalage est décalé, le signal présent sur l'entrée Entrée série est chargé dans son étage le plus bas. Les signaux présents sur les lignes 15 et 41 sont chargés dans le registre à décalage au temps de montée du signal appliqué à son entrée Horloge lorsqu'un niveau haut est présent sur son entré Chargement.

On décrira maintenant le fonctionnement en mode asynchrone du multiplexeur illustré sur la figure 9 en se référant aussi à la figure 4. Dans tous ce qui suit, on supposera qu'un bit 1 correspond à un niveau haut et qu'un bit 0 correspond à un niveau bas. Comme vu plus haut, en mode asynchrone, les signaux SYNC 1, SYNC 2 et SYNC 3 sont maintenus à un niveau bas qui force la sortie des portes ET 42, 44, 56 et 61 au niveau bas.

On supposera qu'initialement l'étage le plus haut du registre à décalage 40 contient un bit 1 et tous les autres étages contiennent un bit 0. La sortie de la porte OU 43 est au niveau bas, la sortie de la porte OU 52 est au niveau haut et le bit 1 disponible à la sortie SR1 du registre à décalage 40 est appliquée comme bit de verrouillage de trame à la ligne de sortie du canal A 20 à travers les portes 42, 46 et 47. La sortie de la porte ET 49 et au niveau haut et l'inverseur 51 produit un bit 0 qui est appliqué à la ligne de sortie du canal B 21. Le niveau haut à la sortie de la porte OU 52 est appliqué à l'entrée Décalage du registre à décalage 40 à travers les portes 62 et 63. Au premier temps de montée du signal CP le contenu du registre à décalage 40 est décalé vers le haut et celui-ci ne contient plus que des bits 0.

La sortie de l'inverseur 53 est au niveau haut et le bit de données D1 présent sur la ligne ED est appliqué à la ligne de sortie du canal A, 20, à travers les portes 45, 46 et 47. La sortie SR1 du registre à décalage 40 maintient la sortie de la porte ET 49 au niveau bas et l'inverseur 51 produit un bit 1 sur la ligne de sortie du canal B, 21. Le niveau haut à la sortie de l'inverseur 53 est appliqué à l'entrée Chargement du registre à décalage 40 à travers les portes 59 et 57. Au second temps de montée du signal CP, les échantillons des signaux de commande X1 − X10 disponinibles sur les lignes 15 comme indiqué sur la figure et un bit 1 appliqué sur la ligne 41 sont chargés dans le registre à décalage 40. Les sorties des portes OU 43 et 52 passent alors au niveau haut, la sortie de la porte ET 45 passe au niveau bas et l'échantillon du signal X1 disponible à la sortie SR1 est appliqué à la ligne de sortie 20 à travers les portes 42, 46 et 47. Le niveau haut à la sortie de la porte OU 43 est inversé par l'inverseur 48 et maintient la sortie de la porte ET 49 au niveau bas, et l'inverseur 51 produit un bit 1 qui est appliqué à la ligne de sortie 21. Le niveau bas à la sortie de l'inverseur 53 maintient l'entrée de Chargement de registre à décalage 40 au niveau bas inhibant tout chargement parallèle dans le registre à décalage 40. Le niveau haut en sortie de la porte OU 52 est appliqué à l'entrée Décalage du registre à décalage 40 à travers les portes 62 et 63. Au troisième temps de montée du signal CP le contenu du registre à décalage 40 est décalé d'un étage vers le haut et un bit 0 appliqué à l'entrée Entrée série par la ligne 64 est chargé dans l'étage le plus bas du registre à décalage 40. L'échantillon du signal X2 est alors disponible à la sortie SR1 et est appliqué à la ligne de sortie 20 à travers les portes 42, 46 et 47 et un bit 1 est appliqué à la ligne de sortie 21 comme vu plus haut. Les opérations de décalage du registre 40 se succèdent de façon semblable jusqu'à ce que l'échantillon du signal X10 ait été appliqué à la ligne de sortie 20, c'est-à-dire jusqu'à ce que le bit 1 initialement chargé dans l'étage le plus bas se retrouve dans l'étage le plus haut du registre à décalage 40, tous les autres étages contenant un bit 0. Le bit 1 disponible à la sortie SR1 est appliqué comme bit de verrouillage de trame à la ligne de sortie 20 à travers les portes 42, 46 et 47. La sortie de la porte OU 43 est au niveau bas, la sortie de la porte ET 49 est au niveau haut et l'inverseur 51 produit un bit 0 qui est appliqué à la ligne de sortie 21. Au temps de montée suivant du signal CP le contenu du registre à décalage 40 est décalé vers le haut et celui-ci ne contient plus que des bits 0, et ainsi de suite.

On décrira maintenant le fonctionnement en mode synchrone du multiplexeur de la figure 9 en se référant aussi à la figure 5. On supposera, à titre d'exemple, que le débit des données est de 19,2 kps, qu'initialement les signaux SYNC 1, SYNC 2 et SYNC 3 sont au niveau bas et que tous les étages du registre à décalage 40 contiennent un bit 0. La sortie de l'inverseur 53 est au niveau haut et l'entrée Chargement du registre à décalage 40 est au niveau haut. Au premier temps de montée du signal CP les échantillons des signaux X1 − X10 sur les lignes 15 et le bit 1 sur la ligne 41 sont chargés dans le registre à décalage 40, et le signal SYNC 1 sur la ligne 16 passe au niveau haut. Ce niveau haut est inversé par l'inverseur 55 et la porte ET 47 produit un bit 0 qui est appliqué comme bit de synchronisation à la ligne de sortie 20. Ce même niveau haut est inversé par l'inverseur 51 qui produit un bit 0 qui est appliqué à la ligne de sortie 21. La sortie de l'inverseur 53 passe au niveau bas et fait passer au niveau bas l'entrée Chargement par l'intermédiaire des portes 59 et 57. Le niveau haut sur la ligne 16 est inversé par l'inverseur 60 et maintient au niveau bas les sorties des portes 61, 62 et 63 et l'entrée Décalage du registre à décalage 40. Au second temps de montée du signal CP le signal SYNC 1 sur la ligne 16 passe au niveau bas et les signaux SYNC 2 et SYNC 3 sur les lignes 17 et 18 passent au niveau haut. Le niveau haut sur la ligne 17 est inversé par l'inverseur 54 et maintient la sortie de la porte ET 42 au niveau bas et le premier bit de données D1 sur la ligne ED est appliqué à la ligne de sortie 20 à travers les portes 44, 46 et 47. La sortie de la porte OU 43 est au niveau haut qui est inversé par l'inverseur 48 et l'inverseur 51 produit un bit 1 qui est appliqué à la ligne de sortie 21. Le niveau haut sur la ligne 17 est inversé par l'inverseur 60 et maintient au niveau bas les sorties des portes 61, 62 et 63 et l'entrée Décalage du registre à décalage 40.

Au troisième temps de montée du signal CP, le signal SYNC 2 sur la ligne 17 passe au niveau bas. Le niveau haut à la sortie de la porte OU 52 et le niveau bas sur la ligne 17 permettent à l'échantillon du signal X1 qui est disponible à la sortie SR1 d'être appliqué à la ligne de sortie 20 à travers les portes 42, 46 et 47. La sortie de la porte OU 43 est au niveau haut qui est inversé par l'inverseur 48 et l'inverseur 51 produit un bit 1 qui est appliqué à la ligne de sortie 21. La sortie de la porte OU 43 et le signal SYNC 3 étant au niveau haut et les signaux SYNC 1 et SYNC 2 étant au niveau bas, la porte ET 61 produit un niveau haut qui est appliqué à l'entrée Décalage du registre à décalage 40 à travers la porte OU 63. Au quatrième temps de montée du signal CP le contenu du registre à décalage 40 est décalé vers le haut et un bit 0 est chargé dans son étage le plus bas. L'échantillon du signal X2 alors disponible sur la sortie SR1 est appliqué à la ligne de sortie 20 et un bit 1 est appliqué à la ligne de sortie 21. L'entrée Décalage du registre à décalage 40 est maintenue au niveau haut. Les échantillons des signaux X3 et X4 sont successivement appliqués à la ligne de sortie 20 de façon semblable.

Au septième temps de montée du signal CP, le contenu du registre à décalage est décalé vers le haut et le signal SYNC 1 passe au niveau haut qui, inversé par les inverseurs 55 et 51, provoque l'application d'un bit 0 sur les lignes de sortie 20 et 21. Le niveau haut du signal SYNC 1 provoque aussi l'application d'un niveau bas à l'entrée Décalage du registre à décalage 40. Au huitième temps de montée du signal CP, les signaux SYNC 1 et SYNC 2 passent respectivement aux niveaux bas et haut, et le bit de données D2 disponible sur la ligne ED est appliqué à la ligne de sortie 20 alors qu'un bit 1 est appliqué sur la ligne de sortie 21. L'entrée Décalage du registre à décalage 40 est maintenue au niveau bas. Au neuvième temps de montée du signal CP le signal SYNC 2 passe au niveau bas et l'échantillon du signal X5 disponible à la sortie SR1 est appliqué à la ligne de sortie 20 alors qu'un bit 1 est appliqué à la ligne de sortie 21. Un niveau haut est appliqué à l'entrée Décalage du registre à décalage 40. Les échantillons des signaux X6 à X10 sont appliqués à la ligne de sortie 20 dans la séquence illustrée sur la figure 5 et de la façon décrite plus haut.

Au dix septième temps de montée du signal CP, le bit 1 initialement chargé dans l'étage le plus bas se retrouve dans l'étage le plus haut du registre à décalage 40 dont les autres étages contiennent un bit 0, les signaux SYNC 1 et SYNC 2 sont au niveau bas et le signal SYNC 3 est au niveau haut. Ce bit 1 est disponible à la sortie SR1 et est appliqué à la ligne de sortie 20. Les sorties des portes 43 et 49 sont respectivement aux niveaux bas et haut, et l'inverseur 51 produit un bit 0 qui est appliqué à la ligne de sortie 21. Un niveau bas est appliqué à l'entrée Décalage du registre à décalage 40. Au dix huitième temps de montée du signal CP, un bit 1 et un bit 0 sont encore respectivement appliqués aux lignes de sortie 20 et 21. Au dix neuvième temps de montée du signal CP, le signal SYNC 1 passe au niveau haut et provoque l'application d'un bit 0 aux lignes de sortie 20 et 21. Les signaux SYNC 1 et SYNC 3, et la sortie de l'inverseur 48 étant au niveau haut, la porte ET 56 produit un niveau haut qui est appliqué à l'entrée Chargement du registre à décalage 40 à travers la porte OU 57. Au vingtième temps de montée du signal CP, les nouveaux échantillons des signaux X1−X10 et le bit 1 sur la ligne 41 sont chargés dans le registre à décalage 40 et la trame suivante est formée de façon semblable à celle décrite précédemment.

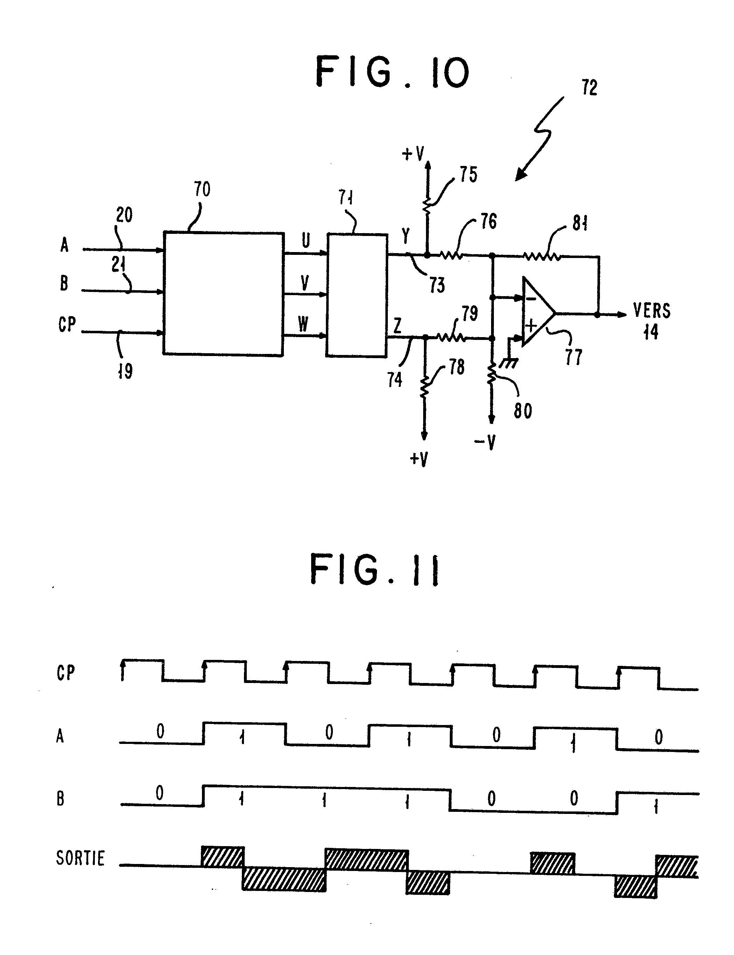

On a représenté sur la figure 10 un exemple de réalisation du codeur 13 de la figure 6. Il comprend deux circuits logiques 70 et 71 et un codeur analogique 72. Le circuit logique 70 reçoit comme entrées les signaux binaires du canal A, que l'on désignera par la suite par A, les signaux binaires du canal B, désignés par la suite B, et les signaux d'horloge CP, qui lui sont respectivement appliqués par les lignes 20, 21 et 19. Le circuit logique 70 dérive des signaux A, B et CP les signaux binaires, U, V et W conformément aux relations logiques suivantes:

$$U = A \, CP \quad + \overline{A} \, B \, \overline{CP} \qquad (1)$$

$$V = \overline{A} \, B \, CP + A \, B \, \overline{CP} \qquad (2)$$

$$W = \overline{A} \, \overline{B} \quad + A \, \overline{B} \, \overline{CP} \qquad (3)$$

Le circuit logique 70 est constitué de façon conventionnelle par un arrangement de portes logiques. Les realtions (1) à (3) sont dérivées directement du tableau I précédemment décrit qui est la table de vérité du circuit logique 70, on note que:

- le signal CP, et son inverse $\overline{\overline{CP}}$ ont la valeur binaire 1 pendant respectivement la première moitié T1 et la seconde moitié T2 de l'intervalle de temps qui correspond à un temps bit, et
- les signaux U, V et W sont représentatifs du signal codé et correspondent respectivement, lorsqu'ils ont la valeur binaire 1, à une impulsion positive (PP), une impulsion négative (NP) et à l'absence d'impulsion (0).

Les signaux U, V, W sont appliqués au circuit logique 71 qui en dérive les signaux logiques Y et Z conformément aux relations logiques suivantes:

$$Y = U \, \overline{V} \, \overline{W} + W \qquad (4)$$

$$Z = U \, \overline{V} \, \overline{W} \qquad (5)$$

Le circuit logique 71 est constitué de façon conventionnelle par un arrangement de portes logiques.

Les signaux logiques Y et Z sont appliqués aux entrées 73 et 74 du codeur analogique 72. L'entrée 73 est reliée à une extrémité d'une résistance 75 dont l'autre extrémité est reliée à une source de tension continue fournissant une tension +V. L'entrée 73 est aussi reliée à une extrémité d'une résistance 76 dont l'autre extrémité est reliée à l'entrée inverseuse d'un amplificateur opérationnel 77. L'entrée 74 est reliée à une extrémité d'une résistance 78 dont l'autre extrémité reçoit la tension +V. L'entrée 74 est aussi reliée à une extrémité d'une résistance 79 dont l'autre extrémité est reliée à l'entrée inverseuse de l'amplificateur 77. L'entrée inverseuse de l'amplificateur 77 est en outre reliée à une extrémité d'une résistance 80 dont l'autre extrémité reçoit une tension −V. La sortie de l'amplificateur 77 est reliée à son entrée inverseuse à travers une résistance 81. L'entrée non inverseuse de l'amplificateur 77 est reliée à la masse. Toutes les résistances ont la même valeur R. Le codeur analogique 72 fournit une impulsion positive (PP), une impulsion négative (NP), ou pas d'impulsion (0) conformément au tableau II suivant:

**Tableau II**

| Y | Z | Sortie |
|---|---|--------|
| 1 | 1 | (PP) |
| 1 | 0 | 0 |
| 0 | 1 | 0 |
| 0 | 0 | (NP) |

La sortie de l'amplificateur 77 est appliquée à l'amplificateur de ligne 14.

On notera que c'est uniquement pour faciliter la compréhension du fonctionnement du codeur 13 que celui-ci a été représenté sur la figure 10 avec deux circuits logiques distincts 70 et 71 et qu'en pratique ces deux circuits logiques seront combinés en un seul.

La figure 11 illustre la forme des signaux en divers points du codeur 13 représenté sur la figure 10.

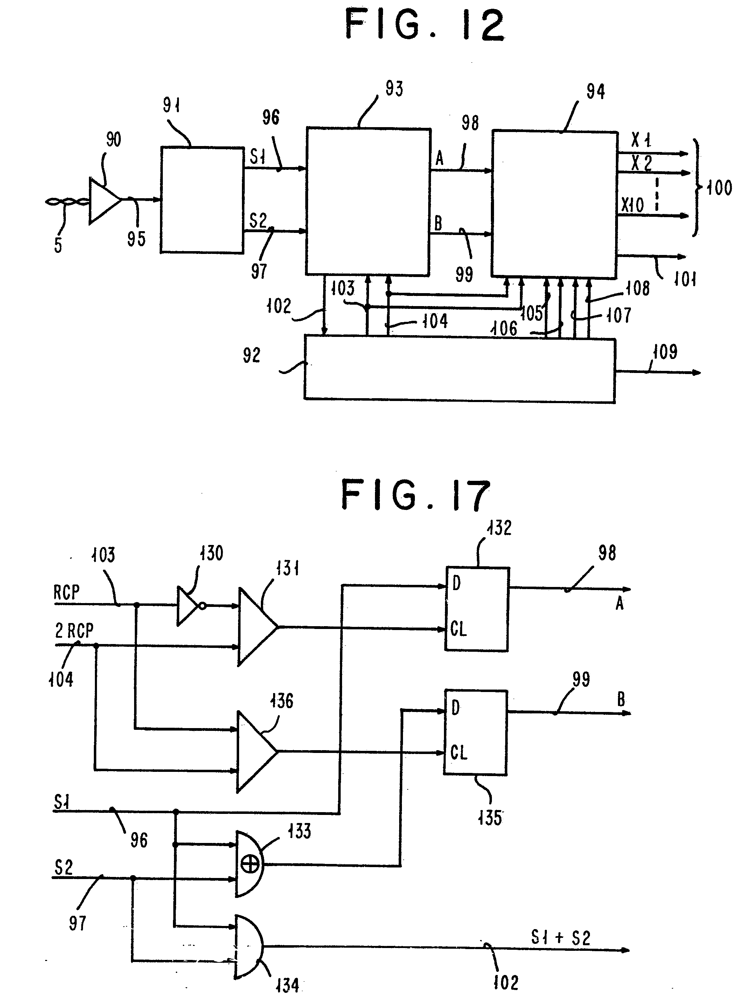

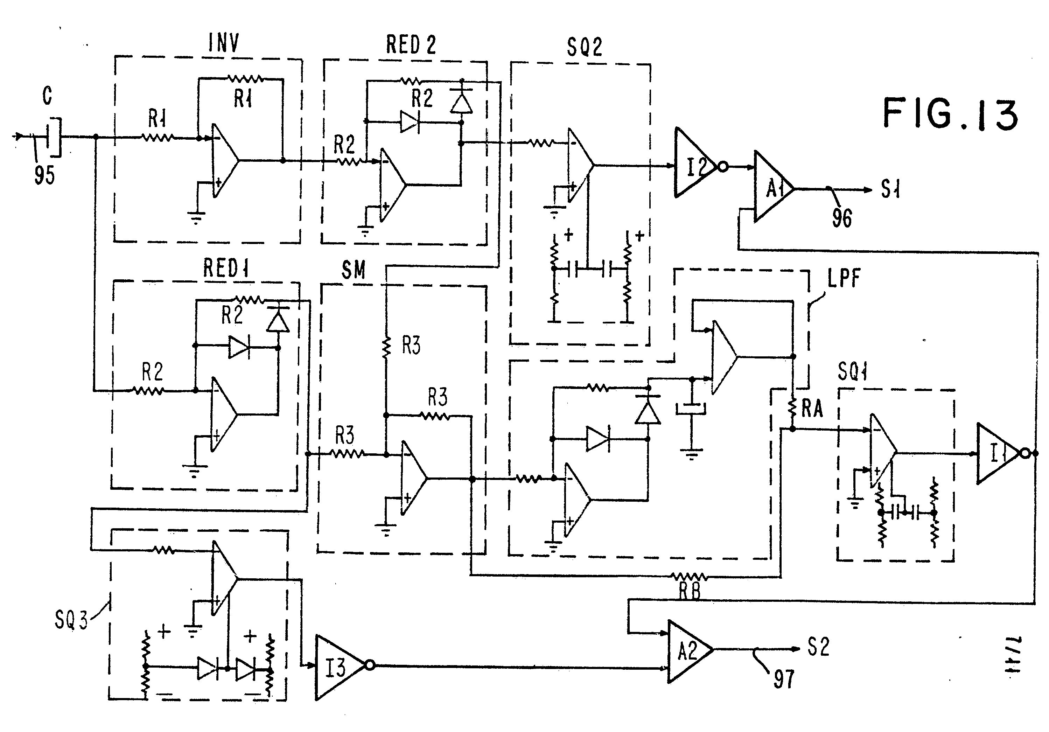

La figure 12 est le bloc diagramme d'un récepteur d'interface conforme à l'invention. A titre d'exemple, on a supposé que le récepteur représenté était le récepteur d'interface 8 de la figure 2. Il comprend les unités fonctionnelles suivantes: un amplificateur équilibré de ligne et de réception 90, qui est un composant classique disponible dans le commerce et qui ne sera pas décrit en détail, et un récepteur analogique 91, un générateur de signaux d'horloge de réception 92, un décodeur 93 et un démultiplexeur 94 qui seront décrits ultérieurement en référence aux figures 13, 14, 17 et 18. Le signal reçu de la ligne 5 est amplifié par l'amplificateur 90 et appliqué par une ligne 95 au récepteur analogique 91 qui en dérive deux signaux désignés S1 et S2 qui seront définis plus loin. Ceux-ci sont appliqués par des lignes 96 et 97 au décodeur 93 qui produit les signaux des canaux de données A et B. Ces signaux sont appliqués respectivement par des lignes 98 et 99 au démultiplexeur 94 qui en dérive les échantillons des signaux de commande X1−X10 et les données reçues qui sont appliquées respectivement à l'ETCD L (figure 2) par dix lignes référencées collectivement 100 et une ligne 101. Le générateur de signaux d'horloge 92 reçoit un signal (S1+S2) du décodeur 93 par une ligne 102 et fournit divers signaux d'horloge qui seront définis plus loin au décodeur 93, au démultiplexeur 94, et à l'ETCD L par des lignes 102−109.

Un exemple de réalisation du récepteur analogique 91 est représenté sur la figure 13. Le signal reçu de la ligne 5 et amplifié par l'amplificateur 90 est appliqué par la ligne 95 à un redresseur mono-alternance RED 1 et à un inverseur INV à travers un condensateur de découplage C. La sortie de l'inverseur INV est appliqué à un redresseur mono-alternance RED 2. Un circuit SM fait la somme des sorties des redresseurs RED 1 et RED 2 et fournit un signal redressé bi-alternance qui est appliqué à un filtre passe-bas LPF dont la sortie définit un niveau de référence continu qui est appliqué à un écrêteur SQ1 à travers une résistance RA. De même la sortie du circuit SM est appliquée à l'écrêteur SQ1 à travers une résistance RB. La valeur du rapport RA/RB définit le niveau, ou seuil, de descrimination du récepteur analogique. La sortie de l'écrêteur SQ1 est inversée par l'inverseur logique I1 dont la sortie est reliée à une entrée de deux portes ET A1 et A2. L'autre entrée de la porte ET A1 est reliée à travers un inverseur logique I2 à la sortie d'un écrêteur SQ2 alors que l'autre entrée de la porte ET A2 est reliée à travers un inverseur logique I3 à la sortie d'un écrêteur SQ3. Les entrées des écrêteurs SQ2 et SQ3 sont reliées respectivement aux sorties des redresseurs RED 1 et RED 2. La porte ET A1 fournit sur la ligne 96 un signal binaire S1 qui a un niveau haut lorsque le signal reçu de la ligne 5 est au niveau haut et la porte ET A2 fournit sur la ligne 97 und signal binaire S2 qui a un niveau haut lorsque le signal reçu de la ligne 5 est au niveau bas. Le récepteur analogique 91 indique donc le niveau du signal reçu par rapport au seuil de discrimination.

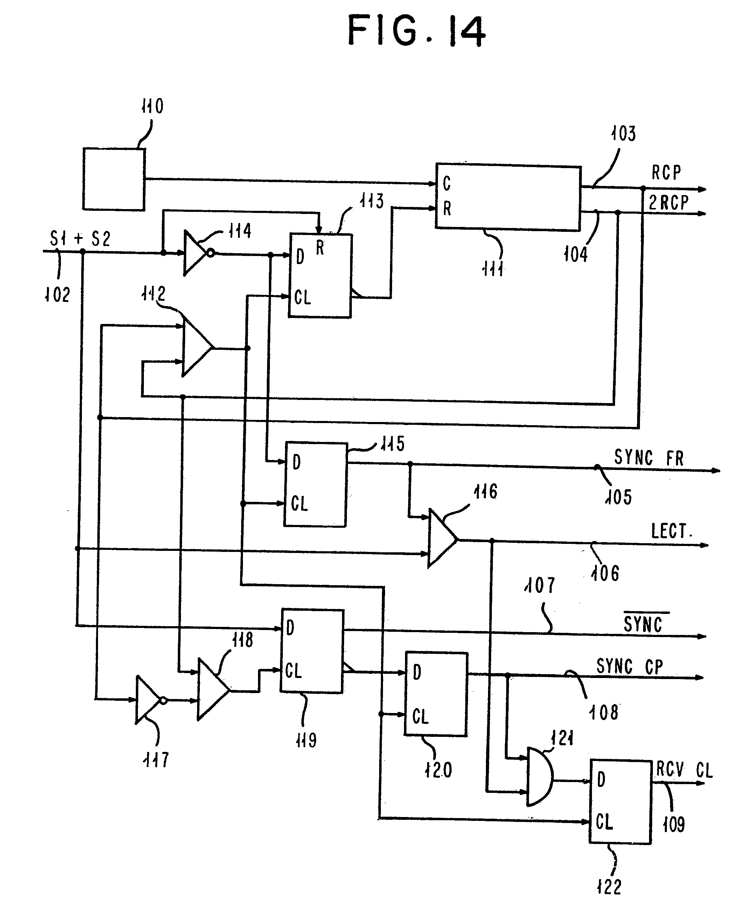

La figure 14 illustre un exemple de réalisation du générateur de signaux d'horloge de réception 92. Il comprend un oscillateur pilote 110 qui génère des impulsions à une cadence égale à M fois le débit binaire en ligne. La sortie de l'oscillateur 110 est reliée à l'entrée de comptage C d'un compteur binaire 111 qui produit sur la ligne 103 une impulsion de sortie pour M impulsions appliquées à son entrée C et sur la ligne 104 une impulsion de sortie pour M/2 impulsions appliquées à une entrée C. On désignera le signal sur la ligne 103 par RCP et celui sur la ligne 104 par 2RCP. Les signaux RCP et 2RCP sont appliqués aux entrées d'une porte ET 112 dont la sortie est reliée à l'entrée horloge CL d'une bascule type D 113. La bascule 113 a son entrée D reliée à la ligne 102 (figure 12) à travers un inverseur 114 et son entrée R de remise à zéro reliée directement à la ligne 102. Les sorties de l'inverseur 114 et de la porte ET 112 sont reliées respectivement aux entrées D et CL d'une bascule type D 115 dont la sortie vraie produit un signal désigné SYNC FR sur la ligne 105 (figure 12). La ligne 105 est reliée à une entrée d'une porte ET 116 qui a son autre entrée reliée à la ligne 102 et qui produit un signal désigné LECT sur la ligne 106 (figure 12). Le signal RCP est appliqué à travers un inverseur 117 à une entrée d'une porte ET 118 qui a son autre entrée reliée à la ligne 104 et sa sortie reliée à la ligne 104 et sa sortie reliée à l'entrée CL d'une bascule type D 119. La sortie vraie de la bascule 119 produit un signal désigné $\overline{\text{SYNC}}$ qui est appliqué à la ligne 107 (figure 12). La sortie complémentaire de la bascule 119 est reliée à l'entrée D d'une bascule D 120 dont l'entrée CL est reliée à la sortie de la porte ET 112 et la sortie vraie produit un signal désigné SYNC CP sur la ligne 108 (figure 12). La sortie vraie de la bascule 120 est reliée en outre à une entrée d'une porte OU 121 qui a son autre entrée reliée à la ligne 106 et sa sortie reliée à l'entrée D d'une bascule type D 122. La bascule 122 a son entrée CL reliée à la sortie de la porte ET 112 et sa sortie vraie reliée à la ligne 109 (figure 12).

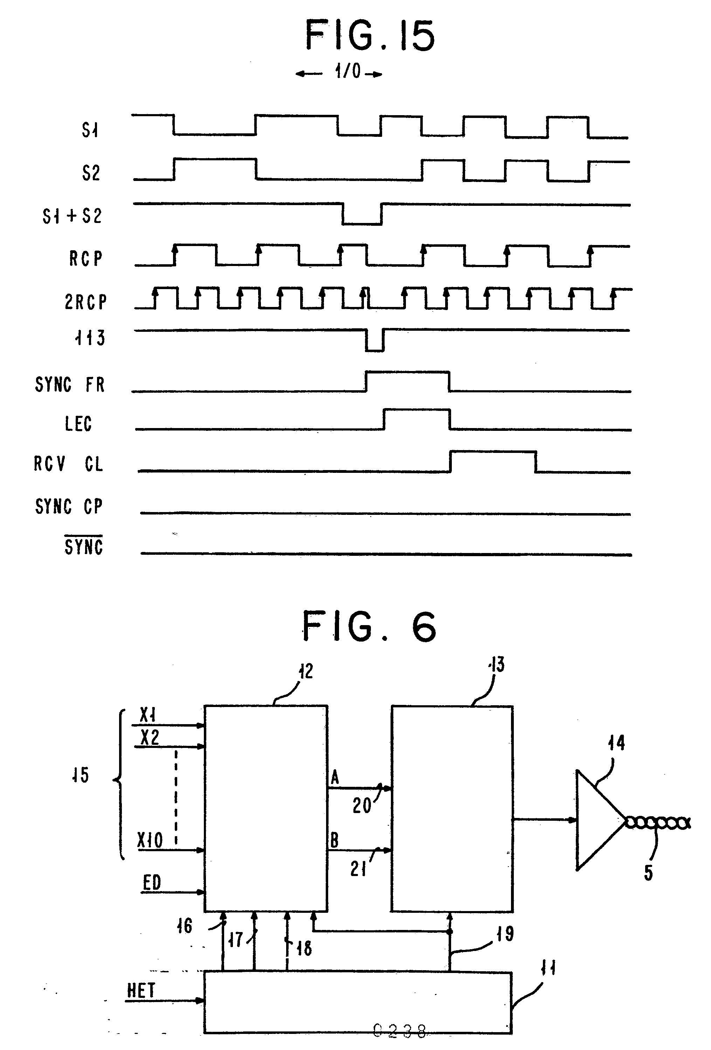

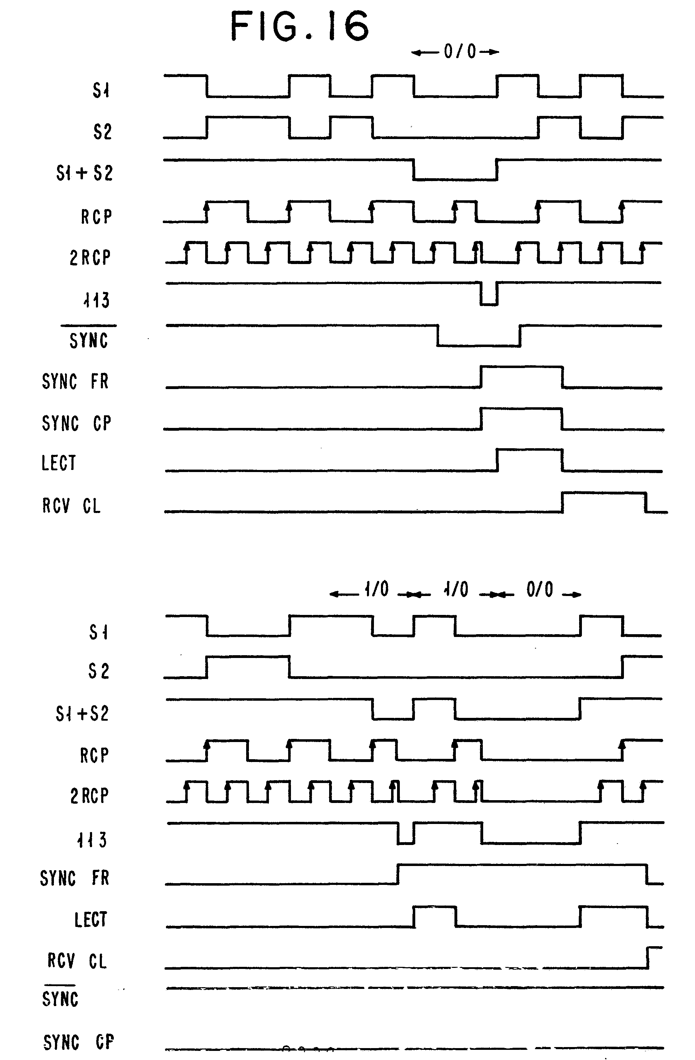

On décrira maintenant le fonctionnement du dispositif de la figure 14 en se référant aussi au tableau I et aux figures 15 et 16 qui illustrent la forme des signaux en divers de ses points. Le signal RCP définit la durée d'un intervalle de temps, ou temps bit, le signal RCP étant au niveau bas pendant la première moitié du temps bit et au niveau haut pendant la seconde moitié. Les temps de montée du signal 2RCP définissent le centre des première et seconde moitiés du temps bit. Le signal (S1 + S2) est la fonction OU des signaux S1 et S2.

Le signal RCP est synchronisé par la détection des bits de verrouillage de trame et des bits de bourrage. Comme vu plus haut, les bits de verrouillage de trame et les bits de bourrage se caractérisent par un bit 1 présent dans le canal A et un bit 0 dans le canal B, respectivement.

En se référant de nouveau à la figure 4, on notera que le bit de contrôle dans le canal B ne prend la valeur 0 que lorsqu'il est associé à un bit de bourrage ou de trame. En se référant au tableau I, on notera qu'un bit 0 dans le canal B est codé par une absence d'impulsion pendant la seconde moitié du temps bit. Le centre de la seconde moitié du temps bit est défini par un temps de montée du signal 2RCP pendant que le signal RCP est au niveau haut. Par la suite on désignera ce temps de montée par T2.

En mode asynchrone (figure 15), le compteur 111 fournit les signaux RCP et 2RCP et les signaux S1 et S2, qui sont représentatifs respectivement d'un niveau haut et d'un niveau bas du signal reçu, prennent des valeurs variées telles que par exemple celles illustrées sur la figure 14. Lorsqu'aucune impulsion n'est présente dans le signal reçu, le signal (S1 + S2) est au niveau bas qui, inversé par l'inverseur 114 est appliqué à l'entrée D des bascules 113 et 115. Au temps T2, la sortie de la porte ET 112 passe au niveau haut et la sortie complémentaire de la bascule 113 passe au niveau bas, mettant à zéro le contenu du compteur 111 et le signal SYNC FR en sortie de la bascule 115 passe au niveau haut. Lorsque le signal (S1 + S2) passe de nouveau au niveau haut, la bascule 113 est remise à zéro, l'entrée R du compteur 111 passe au niveau haut et ce dernier commence à compter les impulsions fournies par l'oscillateur 110 et à fournir les impulsions des signaux RCP et 2RCP. Au temps T2 suivant, le signal SYNC FR passe au niveau bas après un très court retard dû au temps de basculement de la bascule 115. A ce même temps T2 le signal (S1 + S2) étant au niveau haut et le signal SYNC FR étant encore au niveau haut la bascule 122 produit le signal REV CL. Le signal LECT a la forme indiquée sur la figure et le signal SYNC CP est maintenu au niveau bas. On notera que bien que les données soient transmises en mode asynchrone, le signal RCV CL fourni par le générateur 92 produit des impulsions à cadence régulière qui pourrait être utilisée par l'ETCD L ou tout autre dispositif à des fins de synchronisation.

On décrira maintenant le fonctionnement en mode synchrone (figure 16) du dispositif de la figure 14. Comme vu plus haut, le bit de synchronisation se caractérise par un bit 0 dans chacun des canaux A et B. En se référant au tableau I, on notera que la présence simultanée d'un bit 0 dans les canaux A et B est codée par une absence d'impulsion pendant toute la durée du temps bit, et que c'est le seul cas où le signal codé présente une absence d'impulsion pendant la première moitié du temps bit. On détectera donc le bit de synchronisation en détectant une absence d'impulsion pendant la première moitié du temps bit. Le centre de la première moitié du temps bit est déterminé par un temps de montée du signal 2RCP pendant que le signal RCP est au niveau bas. Par la suite on désignera ce temps de montée par T1. Comme on peut le voir sur la figure 5 le bit de synchronisation peut se produire au voisinage d'un bit de verrouillage de trame ou siolé à l'intérieur de la trame. La partie supérieur de la figure 16 illustre la forme des signaux en divers points du générateur 92 lorsque le bit de synchronisation est isolé dans la trame. Le compteur fournit les signaux RCP et 2RCP et les signaux S1 et S2 prennent différentes valeurs telles que par exemple celles illustrées sur la figure. Lorsqu'aucune impulsion n'est présente dans le signal reçu, le signal (S1 + S2) est au niveau bas. Au premier temps T1, la sortie complémentaire de la bascule 119 passe au niveau haut. Au temps T2, le signal RCP est au niveau haut, la sortie de la porte ET 112 passe au niveau haut mettant à zéro le contenu du compteur 111 et le signal SYNC CP passe au niveau haut. Lorsque le signal (S1 + S2) passe aus niveau haut, un niveau haut est appliqué à l'entrée R du compteur 111 qui recommence à compter les impulsions produites par l'oscillateur 110. Au temps T1 suivant la sortie complémentaire de la bascule 119 passe au niveau bas. Au temps T2 suivant le signal SYNC CP est au niveau haut et la bascule 122 produit une impulsion du signal RCV CL. A ce même temps T2 la bascule 120 bascule et le signal SYNC CP passe au niveau bas après un léger retard dû au temps de basculement de la bascule. Les signaux SYNC FR et LECT sont maintenus au niveau bas.

La partie inférieure de la figure 16 illustre la forme des signaux en divers points du générateur 92 lorsque le bit de synchronisation est précédé par un bit de bourrage et un bit de verrouillage de trame. Le contenu du compteur 111 est remis à zéro une première fois à l'apparition du bit de bourrage, et une seconde fois à l'apparition du bit de verrouillage de trame comme vu plus haut et est maintenu à zéro pendant la durée du bit de synchronisation. Les différents signaux produits par le générateur 92 ont la forme illustrée sur la figure. Le signal RCV CL produit des impulsions qui sont appliquées comme bases de temps d'émission à l'ETCD L par la ligne 109.

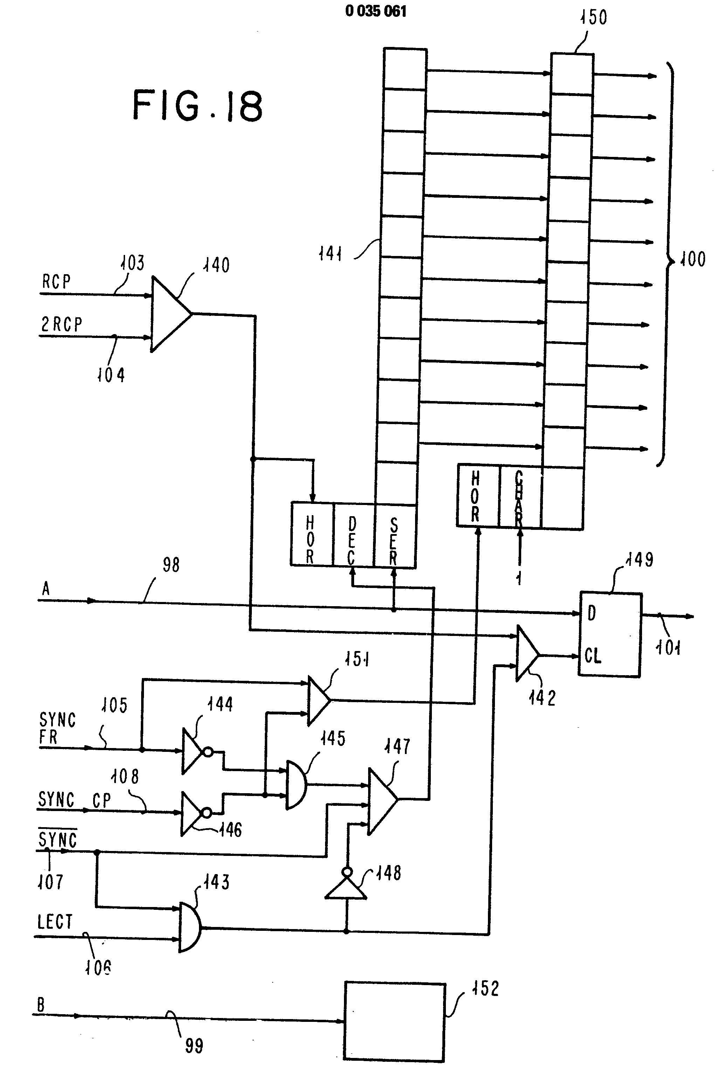

La figure 17 représente un exemple de réalisation du décodeur 93 de la figure 12. La ligne 103 provenant du générateur 92 est reliée à travers un inverseur 130 à une entrée d'une porte ET 131 ayant son autre entrée reliée à la ligne 104 et sa sortie reliée à l'entrée CL d'une bascule D 132 qui a son entrée D reliée à la ligne 96 et sa sortie reliée à la ligne de sortie du canal A 98. Les lignes de sortie 96 et 97 du récepteur analogique 91 sont reliées aux entrées d'un circuit OU Exclusif 133 et aux entrées d'une porte OU 134. La sortie du circuit OU Exclusif 133 est reliée à l'entrée D d'une bascule type D 135 qui a son entrée CL reliée à la sortie d'une porte ET 136 et sa sortie reliée à la ligne de sortie du canal B 99. La porte ET 136 a ses entrées reliées respectivement aux lignes 103 et 104. La porte OU 134 produit le signal (S1 + S2) sur la ligne 102.

On décrira brièvement le fonctionnement du décodeur de la figure 17 en se référant aussi au tableau I. Dans ce tableau, on notera que le bit du canal A n'a la valeur 1 que lorsque le signal codé présente une impulsion positive, c'est-à-dire lorsque le signal S1 a la valeur 1, pendant la première moitié du temps bit. De même, le bit du canal B n'a la valeur 1 que lorsque le signal codé présente une impulsion positive ou négative, c'est-à-dire lorsque l'un quelconque des signaux S1 et S2 a la valeur 1, pendant la seconde moitié du temps bit. Dans le dispositif de la figure 17, le centre de la première moitié du temps bit, ou temps T1, est déterminé par le temps de montée de la sortie de la porte ET 131. La sortie vraie de la bascule 132 prend la valeur qu'avait le signal S1 à ce temps de montée de la sortie de la porte ET 131 et produit ainsi le bit du canal A. Le centre de la seconde moitié du temps bit, ou temps T2, est déterminé par le temps de montée de la sortie de la porte ET 136. La sortie vraie de la bascule 135 prend la valeur de la sortie du circuit OU Exclusif 133 au temps de montée de la sortie de la porte ET 136 et produit ainsi le bit du canal B. On notera que les bits du canal B sont des bits de contrôle qui peuvent être utilisés à des fins de vérification.

La figure 18 représente un exemple de réalisation du démultiplexeur 94 de la figure 12. Les lignes 103 et 104 provenant du générateur 92 sont reliées aux entrées d'une porte ET 140 dont la sortie est reliée à l'entrée Horloge d'un registre à décalage 141 à onze étages, semblable au registre à décalage 40 de la figure 9. La sortie de la porte ET 140 est en outre reliée à une entrée d'une porte ET 142 qui a son autre entrée reliée à la sortie d'une porte OU 143 qui a ses deux entrées reliées respectivement aux lignes 106 et 108. La ligne 105 est reliée à travers un inverseur 144 à une entrée d'une porte OU 145 qui a son autre entrée reliée à la ligne 108 à travers un inverseur 146. La sortie de la porte OU 145 est reliée à une entrée d'une porte ET 147 qui a une autre entrée reliée à la sortie de la porte OU 143 à travers un inverseur 148, et une autre entrée reliée à la ligne 107. La sortie de la porte ET 147 est reliée à l'entrée Décalage du registre à décalage 141. La sortie de la porte ET 142 est reliée à l'entrée CL d'une bascule type D 149 qui a son entrée D reliée à la ligne 98 et sa sortie vraie reliée à la ligne de sortie des données 101. La ligne 98 est en outre reliée à l'entrée Entrée série du registre à décalage 141. Les sorties des dix étages supérieurs du registre à décalage 141 sont respectivement reliées aux entrées des étages d'un registre à dix étages 150. Dans l'exemple illustré sur la figure, le registre 150 est un registre à décalage semblable au registre à décalage 141 mais dans lequel on n'utilise pas les possibilités de décalage. Le registre 150 a son entrée Horloge reliée à la sortie d'une porte ET 151 dont les entrées sont reliées respectivement à la ligne 105 et à la sortie de l'inverseur 146, son entrée Chargement maintenue au niveau haut et les sorties de ses dix étages reliées aux lignes de sortie des signaux de commande 100 (figure 12). La ligne de sortie du canal B, 99, est appliquée à une boite 152 qui illustre diverses fonctions de vérification pour lesquelles les bits de contrôle de canal B peuvent être utilisés.

On décrira le fonctionnement en mode asynchrone du dispositif de la figure 18 en se référant aux figures 4 et 15. Avant la réception de la première trame, le signal reçu de la ligne de transmission a un niveau moyen nul et le signal (S1 + S2) est au niveau bas et les registres 141 et 150 ne contiennent que des bits 0. Lorsque le premier bit de verrouillage de trame qui indique le début de la première trame est reçu, le signal (S1 + S2) passe au niveau haut et au premier temps T2 le signal SYNC FR passe au niveau haut, ce qui provoque l'application d'un niveau bas à l'entrée Décalage du registre à décalage 141. Dès la réception du bit de données D1, le signal LECT passe au niveau haut et au temps T2 suivant qui est déterminé par le temps de montée de la sortie de la porte ET 140, le bit de données D1 sur la ligne 98 est transféré sur la ligne de sortie des données 101. Un court instant après le temps T2 les signaux SYNC FR et SYNC CP passent au niveau bas. Le niveau bas du signal SYNC FR provoque l'application d'in niveau haut à l'entrée Décalage du registre à décalage 141. Les échantillons des signaux X1 — X10 disponibles successivement sur la ligne 98 sont ensuite chargés et décalés de bas en haut dans le registre à décalage 141, à chaque temps T2. Lorsque le bit de verrouillage de trame suivant arrive sur la ligne 98, le contenu du registre à décalage 141 est décalé vers le haut et le bit de verrouillage de trame est chargé dans son étage le plus bas sous la commande d'un front de montée du signal de sortie de la porte ET 140. Un court instant après ce temps de montée le signal SYNC FR passe au niveau haut, ce qui provoque le chargement des échantillons des signaux X1 — X10 contenu dans les dix étages supérieurs du registre à décalage 141 dans les dix étages du registre 150 d'où ils sont appliqués aux lignes 100. Le bit de données et les échantillons suivants des signaux X1−X10 sont traités de façon semblable.

On décrira le fronctionnement en mode synchrone du dispositif de la figure 18 en se référant aux figures 5, 16 et 18 et en prenant l'exemple d'un débit des données égal à 14,4 kbps. Initialement, les registres 141 et 150 ne contiennent que des bits 0, le signal (S1+S2) est au niveau bas es les signaux SYNC CP et SYNC FR sont au niveau haut. Lorsque le premier bit de synchronisation qui indique le début de la première trame, apparaît sur la ligne 98, rien ne se produit car le signal (S1+S2) resultant de l'apparition du bit de synchronisation est au niveau bas. Lorsque le bit de données D1 arrive sur la ligne 98 le signal (S1+S2) passe au niveau haut et au premier temps de montée du signal de sortie de la porte ET 140, le bit D1 est transféré sur la ligne 101, les signaux SYNC CP, SYNC FR et LECT passent au niveau bas et le signal RCV CL passe au niveau haut. Un niveau haut est alors appliqué à l'entrée Décalage du registre de décalage 141. Les échantillons des signaux X1−X6 sont ensuite chargés successivement dans le registre à décalage 141 comme décrit plus haut en référence au mode asynchrone.

Quand le bit de synchronisation qui suit l'échantillon du signal de commande X6 apparaît sur la ligne 98 le signal (S1+S2) passe au niveau bas. Au temps T1 suivant le signal $\overline{\text{SYNC}}$ sur la ligne 107 passe au niveau bas et un niveau bas est appliqué à l'entrée Décalage du registre à décalage 141, ce qui empêche le bit de synchronisation d'être chargé dans le registre à décalage 141. Au temps T2 les signaux SYNC FR et SYNC CP passent au niveau haut empêchant ainsi le contenu du registre 141 d'être chargé dans le registre 150. Lorsque le bit de données D2 apparaît sur la ligne 98 il est transféré sur la ligne de sortie 101 au temps T2 qui suit. Les échantillons des signaux de commande X7−X10 sont ensuite successivement chargés dans le registre à décalage 141. Lorsque le premier bit de bourrage apparaît sur la ligne 98 (partie inférieure de la figure 16), il est chargé dans le registre à décalage 141 au temps T2 qui suit son apparition sur la ligne 98. Un court instant après le temps T2 le signal SYNC FR passe au niveau haut et les échantillons des signaux de commande X1−X10 qui sont disponibles dans les dix étages supérieurs du registre à décalage 141 sont transférés dans le registre 150. Lorsque le bit de données D3 apparaît sur la ligne 98, les signaux (S1+S2) et LECT passent au niveau haut et au temps T2 suivant le bit de données D3 est transféré sur la ligne de sortie 101. La seconde trame est traitée de façon semblable à celle décrite ci-dessus.

Bien que dans la description qui précède l'émetteur et le récepteur d'interface de l'invention relient entre eux un ETTD et un ETCD, l'homme de l'art comprendra qu'ils peuvent être utilisés pour relier entre-eux tous équipements de données et notamment un ETTD à un autre ETTD.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Procédé de multiplexage temporel pour combiner un signal de données ayant un débit binaire DR qui peut prendre un nombre fini de valeurs différentes et N signaux secondaires en un train d'impulsions de débit binaire fixe LR pour transmission sur un support de transmission, caractérisé en ce qu'il comprend les étapes suivantes:

multiplexer le signal de données et les N signaux secondaires avec une trame récurrente dite asynchrone comprenant un bit de verrouillage de trame ayant une valeur prédéterminée, un bit de données et N bits provenant respectivement des N signaux secondaires, lorsque le signal de données est à transmettre en mode asynchrone, multiplexer le signal de données et les N signaux secondaires avec une trame récurrente dite synchrone lorsque le signal de données est à transmettre en mode synchrone, la trame synchrone étant divisée en n sous-trames de longueurs $l_1$ bits, où n est un nombre entier égal ou immédiatement supérieur à la quantité $N/(l_1-2)$ avec $l_1 = LR/DR$, et chaque sous-trame comprenant un bit de synchronisation ayant la valeur opposée à celle du bit de verrouillage de trame, un bit de données et des bits provenant des signaux secondaires, la dernière sous-trame de la trame comprenant en outre un bit de verrouillage de trame,

générer des bits de contrôle, chacun d'eux étant associé à un bit dans lesdites trames, les bits de contrôle ayant une première valeur prédéterminée lorsqu'ils sont associés avec un bit de verrouillage de trame ou un bit de synchronisation, et la valeur opposée à ladite première valeur prédéterminée lorsqu'ils sont associés avec les bits de données et les bits provenant des signaux secondaires, et

coder chaque bit de la trame et son bit de contrôle associé pour transmission simultanée sur le support de transmission.

2. Procédé selon la revendication 1 caractérisé en ce que ledit débit binaire fixe LR est égal au plus petit commun multiple pair des débits binaires que peut avoir le signal de données.

3. Procédé selon la revendication 1 caractérisé en ce que le bit de verrouillage de trame est précédé d'au moins un bit de bourrage ayant la même valeur que celle du bit de verrouillage de trame, le bit de contrôle associé au bit de bourrage ayant la même valeur que celle du bit de contrôle associé au bit de verrouillage de trame.

4. Procédé selon l'une quelconque des revendications précédentes caractérisé en ce que chaque bit de la trame et son bit de contrôle, ces deux bits constituant une paire, son codés de la façon suivante:

si le bit de contrôle a une première valeur binaire, on code la paire de bits en un signal d'un premier type pouvant être bipolaire ou biphasé, et

si le bit de contrôle a la valeur binaire opposée à ladite première valeur binaire, on code la paire de bits en un signal d'un deuxième type pouvant être bipolaire ou biphsé mais différent dudit premier type.

5. Dispositif de multiplexage temporel pour combiner un signal de données ayant un débit binaire DR qui peut prendre un nombre fixe de valeurs différentes et N signaux secondaires en un train d'impulsions de débit binaire fixe LR pour transmission sur un support de transmission, caractérisé en ce qu'il comprend:

des moyens (ED) pour recevoir ledit signal de données,

des moyens (15) pour recevoir lesdits signaux secondaires,

des moyens (HET) pour recevoir des signaux d'horloge,

des moyens de multiplexage (12, 20) pour multiplexer le signal de données et les N signaux secondaires avec une trame récurrente dite asynchrone comprenant un bit de verrouillage de trame ayant une valeur prédéterminée, un bit de données et N bits provenant respectivement des N signaux secondaires, lorsque aucun desdits signaux d'horloge n'est reçu, et pour multiplexer le signal de données et les N signaux secondaires avec une trame récurrente dite synchrone lorsque lesdits signaux d'horloge sont reçus, la trame synchrone étant divisée en n sous-trames de longueurs $l_1$ bits, où n est un nombre entier égal ou immédiatement supérieur à la quantité $N/(l_1-2)$ avec $l_1 = LR/DR$, et chaque sous-trame comprenant un bit de synchronisation ayant la valeur opposée à celle du bit de verrouillage de trame, un bit de données et des bits provenant des signaux secondaires, la dernière sous-trame de la trame comprenant en outre un bit de verrouillage de trame,

des moyens (12, 21) pour générer des bits de contrôle, chacun d'eux étant associé à un bit dans lesdites trames, les bits de contrôle ayant une première valeur prédéterminée lorsqu'ils sont associés avec un bit de verrouillage de trame ou un bit de synchronisation, et la valeur opposée à ladite première valeur prédéterminée lorsqu'ils sont associés avec les bits de données et les bits provenant des signaux secondaires,

des moyens (13) pour coder chaque bit de la trame et son bit de contrôle associé pour transmission simultanée sur le support de transmission, et

des moyens (14) pour appliquer le signal codé audit support de transmission.

6. Dispositif selon la revendication 5 caractérisé en ce que ledit débit binaire fixe LR est égal au plus petit commun multiple pair des débits binaires que peut avoir le signal de données.

7. Dispositif selon la revendication 5 caractérisé en ce que le bit de verrouillage de trame est précédé d'au moins un bit de bourrage ayant la même valeur que celle du bit de verrouillage de trame, le bit de contrôle associé au bit de bourrage ayant la même valeur que celle du bit de contrôle associé au bit de verrouillage de trame.

8. Dispositif selon l'une quelconque des revendications 5 à 7 caractérisé en ce que lesdits moyens pour coder les bits de la trame et les bits de contrôle, chaque bit de la trame et son bit de contrôle associé constituant une paire comprennent:

des moyens (70 – 72) pour coder chaque paire de bits en un signal d'un premier type pouvant être bipolaire ou biphasé lorsque le bit de contrôle a une première valeur binaire, et pour coder chaque paire de bits en un signal d'un second type pouvant être bipolaire ou biphasé mais différent dudit premier type lorsque le bit de contrôle a la valeur binaire opposée à ladite première valeur binaire.

9. Procédé de multiplexage pour démultiplexer un train d'impulsions résultant d'un multiplexage conforme à l'une quelconque des revendications 1 à 4 caractérisé en ce qu'il comprend les étapes suivantes:

extraire du signal multiplexé les bits de la trame et les bits de contrôle associés,

détecter les bits de verrouillage de trame, les bits de synchronisation et les bits de bourrage parmi les bits de la trame en utilisant la valeur des bits de contrôle associés, et

extraire des bits de la trame les bits de données et les bits provenant des N signaux secondaires.

10. Procédé selon la revendication 3 caractérisé en ce que les bits de la trame et les bits de contrôle associés sont extraits du signal multiplexé de la façon suivante:

si le signal multiplexé est dudit premier type, le bit de contrôle a une première valeur binaire et le bit de la trame auquel il est associé a une valeur fonction du signal multiplexé, et

si le signal multiplexé est dudit second type, le bit de contrôle a la valeur binaire opposée à ladite première valeur binaire et le bit de la trame associé a une valeur fonction du signal multiplexé.

11. Emetteur d'interface pour combiner un signal de données ayant un débit binaire DR qui peut prendre un nombre fixe de valeurs différentes et N signaux de commande, fournis par un premier équipement de données, en un train d'impulsions de débit binaire fixe LR pour transmission à un second équipement de données à travers un support de transmission, caractérisé en ce qu'il comprend:

des moyens (ED) pour recevoir ledit signal de données,

des moyens (15) pour recevoir lesdits signaux de commande,

des moyens (HET) pour recevoir des signaux d'horloge fournis par ledit premier équipement de données,

des moyens (12, 20) de multiplexage pour multiplexer le signal de données et les N signaux secondaires avec une trame récurrente dite asynchrone comprenant un bit de verrouillage de trame ayant une valeur prédéterminée, un bit de données et N bits provenant respectivement des N signaux secondaires, lorsque aucun desdits signaux d'horloge n'est reçu, et pour multiplexer le signal de données et les N signaux secondaires avec une trame récurrente dite synchrone lorsque lesdits signaux d'horloge sont reçus, la trame synchrone étant divisée en n sous-trames de longueurs $l_1$ bits, où n est un nombre entier égal ou immédiatement supérieur à la quantité $N/(l_1-2)$ avec $l_1 = LR/DR$, et chaque sous-trame comprenant un bit de synchronisation ayant la valeur opposée à celle du bit de verrouillage de trame, un bit de données et des bits provenant des signaux secondaires, la dernière sous-trame de la trame comprenant en outre un bit de verrouillage de trame,

des moyens (12, 21) pour générer des bits de contrôle, chacun d'eux étant associé à un bit dans lesdites trames, le bit de contrôle ayant une première valeur prédéterminée lorsqu'ils sont associés avec un bit de verrouillage de trame ou un bit de synchronisation, et la valeur opposée à ladite première valeur prédéterminée lorsqu'ils sont associés avec les bits de données et les bits provenant des signaux secondaires,

des moyens (13) pour coder chaque bit de la trame et son bit de contrôle associé pour transmission simultanée sur le support de transmission, et

des moyens (14) pour appliquer le signal codé audit support de transmission.

12. Emetteur d'interface selon la revendication 11 caractérisé en ce que ledit débit binaire fixe LR est égal au plus petit commun multiple pair des débits binaires que peut avoir le signal de données.

13. Emetteur d'interface selon la revendication 11 caractérisé en ce que le bit de verrouillage de trame est précédé d'au moins un bit de bourrage ayant la même valeur que celle du bit de verrouillage de trame, le bit de contrôle associé au bit de bourrage ayant la même valeur que celle du bit de contrôle associé au bit de verrouillage de trame.

14. Emetteur d'interface selon l'une quelconque des revendications 11 à 13 caractérisé en ce que lesdits moyens pour coder les bits de la trame et les bits de contrôle, chaque bit de la trame et son bit de contrôle associé constituant une paire comprennent:

des moyens (70—72) pour coder chaque paire de bits en un signal d'un premier type pouvant être bipolaire ou biphasé lorsque le bit de contrôle a une première valeur binaire, et pour coder chaque paire de bits en un signal d'un second type pouvant être bipolaire ou biphasé mais différent dudit premier type lorsque le bit de contrôle a la valeur binaire opposée à ladite première valeur binaire.

15. Récepteur d'interface pour démultiplexer un train d'impulsions résultant d'un multiplexage d'un signal de données et de N signaux de commande fournis par un premier équipement de données conformément à l'une quelconque des revendications 1 à 4, caractérisé en ce qu'il comprend:

des moyens (93) pour extraire du signal multiplexé les bits de la trame et les bits de contrôle associés,

des moyens (94, 98, 99) pour détecter les bits de verrouillage de trame, les bits de synchronisation et les bits de bourrage parmi les bits de la trame en utilisant la valeur des bits de contrôle associés,

des moyens (94, 140—142, 147, 149) pour extraire des bits de la trame les bits de données et les bits provenant des N signaux de commande, des moyens (92) pour générer des signaux d'horloge à la cadence d'extraction des bits de donnés du signal multiplexé, et

des moyens (100, 101, 109) pour appliquer les bits de données, des bits provenant des N signaux de commande et les signaux d'horloge ci-dessus audit second équipement de données.

## Patentansprüche

1. Verfahren zum Zeitmultiplexen, um ein Datensignal mit einer Bitrate DR, die eine bestimmte Zahl von verschiedenen Werten aufnehmen kann, und N Zusatzsignale zur Bildung einer Impulsfolge mit einer zum Zwecke ihrer Übertragung über eine Übertragungsstrecke festgesetzten Bitrate LR zu kombinieren, dadurch gekennzeichnet, daß es folgende Schritte aufweist:

Multiplexen des Datensignals und der N Zusatzsignale mittels einer zurücklaufenden, asynchron genannten Envelope, die einen Rahmenbit mit einem vorbestimmten Wert, ein Informationsbit und N bzw. aus den N Zusatzsignalen stammenden Bits aufweist, wenn das Datensignal asynchron zu übertragen ist,

Multiplexen des Datensignals und der N Zusatzsignale mittels einer zurücklaufenden, synchron genannten Envelope, wenn das Datensignal synchron zu übertragen ist, wobei die synchrone Envelope in n Unten-Envelopen mit einer Länge von $l_1$ Bits eingeteilt ist, wo n eine der Menge $N/(l_1-2)$ gleiche oder unmittelbar höhere Ganzzahl mit $l_1 = LR/DR$ ist und wobei jede Unten-Envelope ein Synchronisierbit mit einem dem des Rahmenbits entgegengesetzten Wert, ein Informationsbit und aus den Zusatzsignalen stammenden Bits aufweist, wo außerdem die letzte Unten-Envelope ein Rahmenbit beinhaltet,

Erzeugung von jeweils mit jedem in den Envelopen vorliegenden Bit verbundenen Kontrollbits, zu denen ein erster vorbestimmter Wert, wenn sie entweder mit einem Rahmenbit oder einem Synchronisierbit verbunden sind, oder der dem ersten vorbestimmten Wert entgegengesetzte Wert zugeordnet ist, wenn sie mit den Informationsbits und den aus den Zusatzsignalen stammenden Bits verbunden sind,

Kodieren jedes Bits der Envelope und seines entsprechenden Kontrollbits zum Zwecke ihrer gleichzeitigen Übertragung über die Übertragungsstrecke.

2. Verfahren nach Anspruch 1, dadurch gekennzeichnet, daß die festgesetzte Bitrate LR dem kleinsten geraden Vielfachen der für das Datensignal möglichen Bitraten gleich ist.

3. Verfahren nach Anspruch 1, dadurch gekennzeichnet, daß mindestens ein Stopfbit mit dem gleichen Wert wie der des Rahmenbits vor dem letzten steht, wobei dem mit dem Stopfbit verbundenen Kontrollbit der gleiche Wert wie der des mit dem Rahmenbit verbundenen Kontrollbits zugeordnet ist.

4. Verfahren nach irgendeinem der vorherigen Ansprüche, dadurch gekennzeichnet, daß jedes in der Envelope enthaltene Bit und sein entsprechendes Kontrollbit, wobei sie beide ein Paar bilden, wie folgt kodiert sind:
wenn dem Kontrollbit ein erster binärer Wert zugeordnet ist, wird das Bitpaar wie ein Signal eines ersten Typs kodiert, das bipolar oder zweiphasig sein kann,
wenn dem Kontrollbit der dem ersten binären Wert entgegengesetzte Wert zugeordnet ist, ist das Paar von Bits als ein Signal eines zweiten Typs kodiert, das bipolar oder zweiphasig sein kann, das jedoch verschieden von dem ersten Typ ist.

5. Vorrichtung für Zeitmultiplexierung, um ein Datensignal mit einer Bitrate DR, die eine festgesetzte Zahl von verschiedenen Werten aufnehmen kann, und N Zusatzsignale zur Bildung einer Impulsfolge mit einer zum Zwecke der Übertragung über eine Übertragungsstrecke festgesetzten Bitrate LR zu kombinieren, dadurch gekennzeichnet, daß sie aufweist:
Mittel (ED) für den Eingang des Datensignals,
Mittel (15) für den Eingang der Zusatzsignale,
Mittel (HET) für den Eingang von Taktsignalen,
Mittel zum Multiplexen (12, 20) des Datensignals und der N Zusatzsignale mittels einer zurücklaufenden, asynchron genannten Envelope, die ein Rahmenbit mit einem vorbestimmten Wert, ein Informationsbit und N aus den N Zusatzsignalen stammende Bits aufweist, wenn kein Taktsignal eingegangen ist, und zum Multiplexen des Datensignals und der N Zusatzsignale mittels einer synchron genannten Envelope, wenn die Taktsignale eingegangen sind, wobei die synchrone Envelope in n Unten-Envelopen mit einer Länge von $l_1$ Bits eingeteilt ist, wo n eine der Menge $N/(l_1-2)$ gleiche oder unmittelbar höhere Ganzzahl mit $l_1 = LR/DR$ ist, und wobei jede Unten-Envelope ein Synchronisierbit mit einem dem des Rahmenbits entgegengesetzten Wert, ein Informationsbit und aus den Zusatzsignalen stammenden Bits aufweist, wo außerdem die letzte Unten-Envelope ein Rahmenbit beinhaltet,
Mittel (12, 21) zur Erzeugung von jeweils mit jedem in den Envelopen vorliegenden Bit verbundenen Kontrollbits, zu denen ein erster vorbestimmter Wert, wenn sie entweder mit einem Rahmenbit oder einem Synchronisierbit verbunden sind, oder der dem ersten vorbestimmten Wert entgegengesetzte Wert zugeordnet ist, wenn sie mit den Informationsbits und den aus den Zusatzsignalen stammenden Bits verbunden sind,
Mittel (13) zum Kodieren jedes Bits der Envelope und seines entsprechenden Kontrollbits zum Zwecke ihrer gleichzeitigen Übertragung über die Übertragungsstrecke,
Mittel (14), um das kodierte Signal zu der Übertragungsstrecke zuzuführen.

6. Vorrichtung nach Anspruch 5, dadurch gekennzeichnet, daß die festgesetzte Bitrate LR dem kleinsten geraden Vielfachen der für das Datensignal möglichen Bitraten gleich ist.

7. Verfahren nach Anspruch 5, dadurch gekennzeichnet, daß mindestens ein Stopfbit mit dem gleichen Wert wie der des Rahmenbits vor dem letzten steht, wobei dem mit dem Stopfbit verbundenen Kontrollbit der gleiche Wert wie der des mit dem Rahmenbit verbundenen Kontrollbits zugeordnet ist.

8. Verfahren nach irgendeinem der Ansprüche 5 bis 7, dadurch gekennzeichnet, daß die genannten Mittel zum Kodieren der Rahmenbits und der Kontrollbits, wobei jedes Rahmenbit und sein entsprechendes Kontrollbits, wobei jedes Rahmenbit und sein entsprechendes Kontrollbit ein Paar bilden, aufweisen:
Mittel (70, 72) zum Kodieren jedes Bitpaares als ein Signal eines ersten Typs, das bipolar oder zweiphasig sein kann, wenn dem Kontrollbit ein erster binärer Wert zugeordnet ist, und zum Kodieren jedes Bitpaares als ein Signal eines zweiten Typs, das bipolar oder zweiphasig sein kann, das jedoch verschieden von dem ersten Typ ist, wenn dem Kontrollbit der dem ersten binären Wert entgegengesetzte Wert zugeordnet ist.

9. Multiplexenverfahren zum Entmultiplexieren einer Impulsfolge, die aus einem Multiplexenvorgang nach den Ansprüchen 1 bis 4 resultiert, dadurch gekennzeichnet, daß es die folgenden Schritte aufweist:
Herausziehen der Bits der Envelope von den Kontrollbits aus dem multiplexierten Signal,
Abtasten der Rahmenbits, der Synchronisierbits und der Stopfbits unter den Bits der Envelope unter Verwendung des Wertes der entsprechenden Kontrollbits,
Herausziehen der Informationsbits und der aus den Zusatzsignalen stammenden Bits aus den Bits der Envelope.

10. Verfahren nach Anspruch 3, dadurch gekennzeichnet, daß die Bits der Envelope und die entsprechenden Kontrollbits aus dem multiplexierten Signal wie folgt herausgezogen sind:
wenn das multiplexierte Signal von dem ersten Typ ist, ist dem Kontrollbit ein erster binärer Wert zugeordnet, während dem mit ihm verbundenen Bit der Envelope ein von dem multiplexierten Signal abhängiger Wert zugeordnet ist, wenn das multiplexierte Signal von dem zweiten Typ ist, ist dem Kontrollbit der binäre dem ersten binären Wert entgegengesetzte Wert zugeordnet ist, während dem mit ihm verbundenen Bit der Envelope ein von dem multiplexierten Signal abhängiger Wert zugeordnet ist.

11. Schnittstellenemitter zum Kombinieren eines Datensignals mit einer Bitrate DR, die eine festgesetzte Zahl von verschiedenen Werten aufnehmen kann, und von einer ersten Datenanlage gelieferte N Zusatzsignalen zur Bildung einer Impulsfolge mit einer zum Zwecke der Übertragung zu einer zweiten Datenanlage über eine Übertragungsstrecke festgesetzten Bitrate LR, dadurch gekennzeichnet, daß er aufweist:
Mittel (ED) für den Eingang des Datensignals,
Mittel (15) für den Eingang der Steuersignale,
Mittel (HET) für den Eingang der von der ersten Datenanlage gelieferten Taktsignalen,
Multiplexenmittel (12, 20) zum Multiplexen des Datensignals und der N Zusatzsignale mittels einer zurücklaufenden, asynchron genannten Envelope, die ein Rahmenbit mit einem vorbestimmten Wert, ein Informationsbit und N bzw. aus den N Zusatzsignalen stammende Bits aufweist, wenn kein Taktsignal eingegangen ist, und zum Multiplexen des Datensignals und der N Zusatzsignale mittels einer synchron genannten Envelope, wenn die Taktsignale eingegangen sind, wobei die synchrone Envelope in n Unten-Envelopen mit einer Länge von $l_1$ Bits eingeteilt ist, wo n eine der Menge $N/(l_1-2)$ gleiche oder unmittelbar höhere Ganzzahl mit $l_1 = LR/DR$ ist, und wobei jede Unten-Envelope ein Synchronisierbit mit einem dem des Rahmenbits entgegengesetzten Wert, ein Informationsbit und aus den Zusatzsignalen stammende Bits aufweist, wo außerdem die letzte Unten-Envelope ein Rahmenbit beinhaltet,
Mittel (12, 21) zur Erzeugung von jeweils mit jedem in den Envelopen vorliegenden Bit verbundenen Kontrollbits, zu denen ein erster vorbestimmter Wert, wenn sie entweder mit einem Rahmenbit oder einem Synchronisierbit verbunden sind, oder der dem ersten vorbestimmten Wert entgegengesetzte Wert zugeordnet ist, wenn sie mit den Informationsbits und den aus den Zusatzsignalen stammenden Bits verbunden sind,
Mittel (13) zum Kodieren jedes Bits der Envelope und seines entsprechenden Kontrollbits zum Zwecke ihrer gleichzeitigen Übertragung über die Übertragungsstrecke,
Mittel (14), um das kodierte Signal zu der Übertragungsstrecke zuzuführen.

12. Schnittstellenemitter nach Anspruch 11, dadurch gekennzeichnet, daß die festgesetzte Bitrate LR dem kleinsten geraden Vielfachen der für das Datensignal möglichen Bitraten gleich ist.

13. Schnittstellenemitter nach Anspruch 11, dadurch gekennzeichnet, daß mindestens ein Stopfbit mit dem gleichen Wert wie der des Rahmenbits vor dem letzten steht, wobei dem mit dem Stopfbit verbundenen Kontrollbit der gleiche Wert wie der des mit dem Rahmenbit verbundenen Kontrollbits zugeordnet ist.

14. Schnittstellenemitter nach irgendeinem der Ansprüche 11 bis 13, dadurch gekennzeichnet, daß die genannten Mittel zum Kodieren der Bits der Envelope und der Kontrollbits, wobei jedes Rahmenbit und sein entsprechendes Kontrollbit ein Paar bilden, aufweisen:
Mittel (70, 72) zum Kodieren jedes Bitpaars als ein Signal eines ersten Typs, das bipolar oder zweiphasig sein kann, wenn dem Kontrollbit ein erster binärer Wert zugeordnet ist, und zum Kodieren jedes Bitpaares als ein Signal eines zweiten Typs, das bipolar oder zweiphasig sein kann, das jedoch verschieden von dem ersten Typ ist, wenn dem Kontrollbit der dem ersten binären Wert entgegengesetzte Wert zugeordnet ist.

15. Schnittstellenempfänger zum Entmultiplexieren einer Impulsfolge, die aus einem Multiplexenvorgang von einem Datensignal und N von einer ersten Datenanlage gelieferten Steuersignalen nach einem der Ansprüche 1 bis 4 resultiert, dadurch gekennzeichnet, daß er die folgenden Schritte aufweist:
Mittel (93) zum Herausziehen der Bits der Envelope und der entsprechenden Kontrollbits aus dem multiplexierten Signal,
Mittel (94, 98) zum Abtasten der Rahmenbits, der Synchronisierbits und der Stopfbits unter den Bits der Envelope unter Verwendung des Wertes der entsprechenden Kontrollbits,
Mittel (14, 140–142, 147, 149) zum Herausziehen der Informationsbits und der aus den Steuersignalen stammenden Bits aus den Bits der Envelope,
Mittel (92) zur Erzeugung von Taktsignalen mit der gleichen Geschwindigkeit, mit der die Informationsbits aus dem multiplexierten Signal herausgezogen sind, und
Mittel (100, 101, 109) zur Zuführung der Informationsbits aus den N Steuersignalen stammenden Bits und der obengenannten Taktsignale zu der zweiten Datenanlage.

## Claims

1. A time-division multiplexing method for combining a data signal transmitted at a bit rate DR which may take on a given number of different values and N secondary signals into one train of pulses for transmission at a fixed bit rate LR over a transmission path, characterized in that it includes the steps of:
multiplexing the data signal together with the N secondary signals by means of a recurrent frame called an asynchronous frame which includes a frame-alignment bit having a predetermined value, a data bit, and N bits pertaining respectively to the N secondary signals, whenever the data signal is to be transmitted in asynchronous mode,
multiplexing the data signal together with the N secondary signals by means of a recurrent frame called a synchronous frame whenever the data signal is to be transmitted in synchronous mode, said synchronous frame being divided up into n subframes $l_1$ bits in length, where n is an integer equal to or immediately larger than the quantity $N/(l_1-2)$ with $l_1=LR/DR$, and each subframe including a synchronization bit whose value is complementary to that of the frame-alignment bit, a data bit, and bits pertaining to the secondary signals, with the last subframe in the frame additionally including a frame-alignment bit,
generating control bits each of which is associated with one bit in said frames, said control bits having a first predetermined value when they are associated with a frame-alignment bit or with a synchronization bit, and the complementary value to said first predetermined value when they are associated with the data bits or with the bits pertaining to the secondary signals, and
encoding each of the bits in the frame and the control bit associated therewith for simultaneous transmission over the transmission path.

2. A method according to claim 1, characterized in that said fixed bit rate LR is equal to the least common multiple of even value of the bit rates at which the data signal can be transmitted.

3. A method according to claim 1, characterized in that the frame-alignment bit is preceded by at least one stuffing bit which has the same value as the frame-alignment bit, with the control bit associated with the stuffing bit having the same value as the control bit associated with the frame-alignment bit.

4. A method according to any one of the preceding claims, characterized in that each of the frame bits and its control bit, both of which make up a pair, are encoded as follows:
if the control bit has a first logic value, the pair of bits is encoded as a signal fo a first type which may be bipolar or two-phased, and
if the control bit has a value complementary to that of said first logic value, the pair of bits is encoded as a signal of a second type which may be bipolar or two-phased but different from said first type.

5. A time-division multiplexing method for combining a data signal transmitted at a bit rate DR which may take on a given number of different values and N secondary signals into one train of pulses for transmission at a fixed bit rate LR over a transmission path, characterized in that it includes:
means (TD) for receiving said data signal,
means (15) for receiving said secondary signals,
means (TT-DTE) for receiving timing signals,
means (12, 20) for multiplexing the data signal togetherwith the N secondary signals by means of a recurrent frame called an asynchronous frame which includes a frame-alignment bit having a predetermined value, a data bit, and N bits pertaining respectively to the N secondary signals, whenever none of said timing signals is received, and for multiplexing the data signal togehter with the N secondary signals by means of a recurrent frame called a synchronous frame whenever said timing signals are received, said synchronous frame being divided up into n subframes $l_1$ bits in length, where n is an integer equal to or immediately larger than the quantity $N/(l_1-2)$ with $l_1=LR/DR$, and each subframe including a synchronization bit whose value is complementary to that of the frame-alignment bit, a data bit, and bits pertaining to the secondary signals, with the last subframe in the frame additionally including a frame-alignment bit,
means (12, 21) for generating control bits each of which is associated with one bit in said frames, said control bits having a first predetermined value when they are associated with a frame-alignment bit or with a synchronization bit, and the complementary value to said first predetermined value when they are associated with the data bits or with the bits pertaining to the secondary signals,
means (13) for encoding each of the frame bits and the control bit associated therewith for simultaneous transmission over the transmission path, and
means (14) for applying the encoded signal to said transmission path.

6. A device according to claim 5, characterized in that said fixed bit rate LR is equal to the least common multiple of even value of the bit rates at which the data signal can be transmitted.

7. A device according to claim 5, characterized in that the frame-alignment bit is preceded by at least one stuffing bit which has the same value as the frame-alignment bit, with the control bit associated with the stuffing bit having the same value as the control bit associated with the frame-alignment bit.

8. A device according to any one of claims 5 to 7, characterized in that said means for encoding the frame bits and the control bits, with every frame bit and the control bit associated therewith making up a pair of bits, includes:
means (70, 72) for encoding each pair of bits as a signal of a first type which may be bipolar or two-phased, whenever the control bit has a first logic value, and for encoding each pair of bits as a signal of a second type which may be bipolar or two-phased but is different from said first type, whenever the value of the control bit is complementary to said first logic value.

9. A demultiplexing method for demultiplexing a train of pulses resulting from a multiplexing process in accordance with any one of claims 1 to 4, characterized in that it includes the steps of:
extracting from the multiplexed signal the frame bits and the associated control bits,
detecting the frame-alignment bits, the synchronization bits and the stuffing bits among the frame bits by using the value of the associated control bits, and

extracting from the frame bits the data bits and the bits pertaining to the N secondary signals.

10. A method according to claim 3, characterized in that the frame bits and the associated control bits are extracted from the multiplexed signal as follows:

if the multiplexed signal is of the first type, the control bit has a first logic value and the value of frame bit associated therewith is dependent upon the multiplexed signal,

if the multiplexed signal is of said second type, the logic value of the control bit is complementary to said first logic value, and the value of the frame bit associated therewith is dependent upon the multiplexed signal.

11. An interface transmitter for combining a data signal transmitted at a bit rate DR which may tyke on a given number of different values and N control signals supplied by a first data equipment, into one train of pulses for transmission at a fixed bit rate LR to a second data equipment over a transmission path, characterized in that it includes:

means (TD) for receiving said data signal,

means (15) for receiving said control signals,

means (TT-DTE) for receiving the timing signals supplied by said first data equipment,

means (12, 20) for multiplexing the data signal together with the N secondary signals by means of a recurrent frame called an asynchronous frame which includes a frame-alignment bit having a predetermined value, a data bit, and N bits pertaining respectively to the N secondary signals, whenever none of said timing signals is received, and for multiplexing the data signal togehter with the N secondary signals my means of a recurrent frame called a synchronous frame whenever said timing signals are received, said synchronous frame being divided up into n subframes $l_1$ bits in length, where n is an integer equal to or immediately larger than the quantity $N/(l_1-2)$ with $l_1 = LR/DR$, and each subframe including a synchronization bit whose value is complementary to that of the frame-alignment bit, a data bit, and bits pertaining to the secondary signals, with the last subframe in the frame additionally including a frame-alignment bit,

means (12, 21) for generating control bits each of which is associated with one bit in said frames, said control bits having a first predetermined value when they are associated with a frame-alignment bit or with a synchronization bit, and the complementary value to said first predetermined value when they are associated with the data bits or with the bits pertaining to the secondary signals,

means (13) for encoding each of the bits in the frame and the control bit associated therewith for simultaneous transmission over the transmission path, and

means (14) for applying the encoded signal to said transmission path.

12. An interface transmitter according to claim 11, characterized in that said fixed bit rate LR is equal to the least common multiple of even value of the bit rates at which the data signal can be transmitted.

13. An interface transmitter according to claim 11, characterized in that the frame-alignment bit is preceded by at least one stuffing bit which has the same value as the frame-alignment bit, with the control bit associated with the stuffing bit having the same value as the control bit associated with the frame-alignment bit.

14. An interface transmitter according to any one of claims 11 to 13, characterized in that said means for encoding the frame bits and the control bits, with every frame bit and the control bit associated therewith making up a pair of bits, includes:

means (70, 72) for encoding each pair of bits as a signal of a first type which may be bipolar or two-phased, whenever the control bit has a first logic value, and for encoding each pair of bits as a signal of a second type which may be bipolar or two-phased but is different from said first type, whenever the value of the control bit is complementary to said first logic value.

15. An interface receiver for demultiplexing a train of pulses obtained by multiplexing together a data signal and N control signals supplied by a first data equipment in accordance with any one of claims 1 to 4, characterized in that it includes:

means (93) for extracting from the multiplexed signal the frame bits and the associated control bits,

means (94, 98, 99) for detecting the frame-alignment bits, the synchronization bits and the stuffing bits among the frame bits by using the values of the associated control bits,

means (94, 140–142, 147, 149) for extracting from the frame bits the data bits and the bits pertaining to the N control signals,

means (92) for generating the timing signals at the rate at which the data bits are extracted from the multiplexed signal, and

means (100, 101, 109) for applying the data bits, the bits pertaining to the N control signals and the timing signals to said second data equipment.

# FIG.1

# FIG.2

# FIG.3

115 200 KHZ

SYNCHRO

ASYNCHRO

8 → 14,4 Kbps
2 → 7,2 Kbps
2 → 3,6 Kbps

6 → 19,2 Kbps
2 → 9,6 Kbps
2 → 4,8 Kbps
2 → 2,4 Kbps
2 → 1,2 Kbps
2 → 0,6 Kbps

0 035 061

# FIG. 4

# FIG. 5

# FIG. 7

# FIG. 8

# FIG.9

27

# FIG . 10

# FIG . 11

0 035 061

# FIG. 12

# FIG. 17

# FIG.13

# FIG. 14

# FIG. 15

← 1/0 →

S1

S2

S1 + S2

RCP

2RCP

113

SYNC FR

LEC

RCV CL

SYNC CP

$\overline{SYNC}$

# FIG. 6

X1
X2

15

X10

ED

12    13

A    14
20

B
21

5

16    17    18    19

HET    11

0 238

FIG.16

FIG.18

0 035 061